(19) Europäisches Patentamt
European Patent Office
Office européen des brevets

(11) **EP 2 946 615 B1**

(12) **EUROPEAN PATENT SPECIFICATION**

(45) Date of publication and mention
of the grant of the patent:
**28.12.2016   Bulletin 2016/52**

(51) Int Cl.:
*H04W 52/32* (2009.01)     *H04W 52/22* (2009.01)
*H04W 72/12* (2009.01)     *H04W 52/14* (2009.01)
*H04W 52/24* (2009.01)     *H04W 52/38* (2009.01)
*H04W 52/50* (2009.01)

(21) Application number: **13747741.0**

(22) Date of filing: **29.07.2013**

(86) International application number:
**PCT/US2013/052544**

(87) International publication number:
**WO 2014/113067 (24.07.2014 Gazette 2014/30)**

(54) **MANAGEMENT OF WIRELESS COMMUNICATIONS USING INFORMATION RELATING TO SCHEDULING REQUEST PERFORMANCE**

VERWALTUNG VON DRAHTLOSER KOMMUNIKATION UNTER VERWENDUNG VON INFORMATIONEN BEZÜGLICH DER PLANUNGSANFRAGELEISTUNG

GESTION DE COMMUNICATIONS SANS FIL AU MOYEN D'INFORMATIONS RELATIVES AUX PERFORMANCES DES DEMANDES DE PLANIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2013   US 201361753862 P
26.07.2013   US 201313951524**

(43) Date of publication of application:
**25.11.2015   Bulletin 2015/48**

(73) Proprietor: **Qualcomm Incorporated**
**San Diego, CA 92121-1714 (US)**

(72) Inventors:
• **SHUKAIR, Mutaz, Zuhier Afif**
**San Diego, California 92121-1714 (US)**
• **SAWHNEY, Salil**
**San Diego, California 92121-1714 (US)**

• **AMBRISS, Mouaffac**
**San Diego, California 92121-1714 (US)**
• **BHAIK, Shruti**
**San Diego, California 92121-1714 (US)**
• **KAMALA GOVINDARAJU, Vishwanth**
**San Diego, California 92121-1714 (US)**
• **OZTURK, Ozcan**
**San Diego, California 92121-1714 (US)**
• **KITAZOE, Masato**
**San Diego, California 92121-1714 (US)**

(74) Representative: **Wegner, Hans**
**Bardehle Pagenberg Partnerschaft mbB**
**Patentanwälte, Rechtsanwälte**
**Prinzregentenplatz 7**
**81675 München (DE)**

(56) References cited:
**WO-A1-2012/170317     US-A1- 2009 239 590
US-A1- 2012 236 805**

EP 2 946 615 B1

**Description**

CROSS REFERENCE

The present Application for Patent claims priority benefit of co-pending U.S. Patent Application No. 13/951,524 by Shukair et al., entitled "Management of Wireless Communications Using Information Relating to Scheduling Request Performance," filed July 26, 2013, which claims the benefit of U.S. Provisional Patent Application No. 61/753,862 by Shukair et al., entitled "Management of Wireless Communications Using Information Relating to Scheduling Request Performance," filed January 17, 2013. This application is assigned to the assignee hereof.

BACKGROUND

Wireless communication networks are widely deployed to provide various communication services such as voice, video, packet data, messaging, broadcast, and the like. These wireless networks may be multiple-access networks capable of supporting multiple users by sharing the available network resources.

A wireless communication network may include a number of base stations, NodeBs, or eNodeBs (eNBs) that can support communication for a number of user equipments (UEs). A UE may communicate with a base station via downlink and uplink. The downlink (or forward link) refers to the communication link from the base station to the UE, and the uplink (or reverse link) refers to the communication link from the UE to the base station. A UE may initiate an uplink communication by sending a scheduling request to an eNB. In response to receiving the scheduling request, the eNB may allocate resources for the uplink communication. The allocation of resources may be referred to as an uplink grant.

Document US 2012/0236805 A1 discloses a method and apparatus for providing information to determine a cause of low Quality of Service (QoS) includes Scheduling Request (SR) transmission status reporting or reporting uplink power for SR transmission. The SR transmission status reporting includes a User Equipment (UE) being configured with Physical Uplink Control Channel (PUCCH) resource for SR transmission, and the UE reporting SR transmission status information to a connecting eNB. The reporting of uplink power for SR transmission includes a UE being configured with a PUCCH resource for SR transmission; and the UE reporting uplink power information for SR transmission to a connecting eNB.

SUMMARY

The invention is defined in independent claims 1, 11 and 15.

The described features generally relate to one or more improved methods, systems, and/or devices for managing wireless communications. Wireless communications may be managed on the UE side, for example, by compiling information relating to a scheduling request performance of a first set of one or more user equipments (UEs), and transmitting at least a subset of the information to trigger an identification of an adjustment of an uplink power control setting of a second set of one or more UEs. Wireless communications may be managed on the eNB side, for example, by receiving information to trigger an identification of an adjustment of an uplink power control setting for transmitting scheduling requests. The information may be received from each of a first plurality of UEs. The information may be analyzed, and a power adjustment may be identified for the uplink power control setting for at least one of a second plurality of UEs. The identified power adjustment may then be transmitted to the at least one UE.

A method for managing wireless communications is described. In one configuration, information relating to a scheduling request performance of a first set of one or more UEs may be compiled. At least a subset of the information may be transmitted to trigger an identification of an adjustment of an uplink power control setting of a second set of one or more UEs.

In some embodiments, an adjusted nominal power value may be received, and the uplink power control setting may be adjusted according to the adjusted nominal power value. In some embodiments, a power modification delta may be received, and the uplink power control setting may be adjusted according to the power modification delta. In some embodiments, a power modification instruction may be received, and the uplink power control setting may be maintained according to the power modification instruction.

In some cases, compiling information relating to the scheduling request performance may include determining a quality level of the scheduling request performance. The quality level of the scheduling request performance may be represented in a single bit of information, which single bit of information may be transmitted as part of the subset of information to trigger the identification of the adjustment of the uplink power control setting.

In some configurations, compiling information relating to the scheduling request performance may include generating an uplink power control setting adjustment request. The request may be based at least in part on a determined quality level of the scheduling request performance. In some cases, the uplink power control adjustment request may be transmitted as part of the subset of information to trigger the identification of the adjustment of the uplink power control setting.

In some embodiments, the adjustment of the uplink power control setting may include an instruction to increase a transmit power level for uplink transmissions of scheduling requests, or an instruction to decrease a transmit power level for uplink transmissions of scheduling requests.

Compiling information relating to the scheduling request performance may include determining whether a number of failed scheduling requests satisfies a threshold, and upon determining that the number of failed scheduling requests satisfies the threshold, transmitting an indication of a complete scheduling request failure. Compiling information relating to the scheduling request performance may also include logging a number of failed scheduling requests preceding a successful scheduling request. Compiling information relating to the scheduling request performance may also include compiling statistics on a number of failed scheduling requests of each of the first set of one or more UEs preceding different ones of a plurality of successful scheduling requests of each of the first set of one or more UEs. Still further, compiling information relating to the scheduling request performance may include correlating at least one failed scheduling request with at least one radio frequency (RF) measurement or with a physical uplink control channel (PUCCH) format. Compiling information relating to the scheduling request performance may also include ranking items of the compiled information based on a reliability level associated with each item of the compiled information, and selecting a subset of higher ranked items for transmission to cause the adjustment of the uplink power control setting.

In some configurations, the at least a subset of the information to trigger an identification of an adjustment of an uplink power control setting may be transmitted in at least one information element, or as application data, or in a Media Access Control (MAC) header field.

In some embodiments, the second set of one or more UEs may include the first set of one or more UEs. In other embodiments, the first set of one or more UEs may be located in a first cell and the second set of one or more UEs may be located in a second cell, with the second cell being different than the first cell.

In some configurations, the uplink power control setting may be a Physical Uplink Control Channel (PUCCH) power control setting.

A UE for managing wireless communications is also described. The UE may include a processor, and memory in electronic communication with the processor. Instructions may be stored in the memory. The instructions may be executable by the processor to compile information relating to a scheduling request performance of a first set of one or more UEs, and transmit at least a subset of the information to trigger an identification of an adjustment of an uplink power control setting of a second set of one or more UEs.

In some embodiments, the instructions may be further executable by the processor to receive an adjusted nominal power value and adjust the uplink power control setting according to the adjusted nominal power value. In some embodiments, the instructions may be further executable by the processor to receive a power modification delta and adjust the uplink power control setting according to the power modification delta. In some embodiments, the instructions may be further executable by the processor to receive a power modification instruction and maintain the uplink power control setting according to the power modification instruction.

In some cases, the instructions to compile information relating to the scheduling request performance may be further executable by the processor to determine a quality level of the scheduling request performance. The quality level of the scheduling request performance may be represented in a single bit of information. The single bit of information may in some cases be transmitted as part of the subset of information to trigger the identification of the adjustment of the uplink power control setting.

In some configurations, the instructions to compile information relating to the scheduling request performance may include may be further executable by the processor to generate an uplink power control setting adjustment request. The request may be based at least in part on a determined quality level of the scheduling request performance. In some cases, the uplink power control adjustment request may be transmitted as part of the subset of information to trigger the identification of the adjustment of the uplink power control setting.

In some embodiments, the adjustment of the uplink power control setting may include an instruction to increase a transmit power level for uplink transmissions of scheduling requests, or an instruction to decrease a transmit power level for uplink transmissions of scheduling requests.

The instructions to compile information relating to the scheduling request performance may be further executable by the processor to determine whether a number of failed scheduling requests satisfies a threshold, and upon determining that the number of failed scheduling requests satisfies the threshold, transmit an indication of a complete scheduling request failure. The instructions to compile information relating to the scheduling request performance may also be further executable by the processor to log a number of failed scheduling requests preceding a successful scheduling request. The instructions to compile information relating to the scheduling request performance may also be further executable by the processor to compile statistics on a number of failed scheduling requests of each of the first set of one or more UEs preceding different ones of a plurality of successful scheduling requests of each of the first set of one or more UEs. Still further, the instructions to compile information relating to the scheduling request performance may be further executable by the processor to correlate at least one failed scheduling request with at least one RF measurement or with a PUCCH format. The instructions to compile information relating to the scheduling request performance may also be further executable by the processor to rank items of the compiled information based on a reliability level associated with each item of the compiled information, and select a subset of higher ranked items for transmission to cause the adjustment of the uplink power control setting.

In some configurations, the instructions to transmit at least a subset of the information to trigger an identification of an adjustment of an uplink power control setting may be further executable by the processor to transmit the information in at least one information element, or as application data, or in a MAC header field.

In some embodiments, the second set of one or more UEs may include the first set of one or more UEs. In other embodiments, the first set of one or more UEs may be located in a first cell and the second set of one or more UEs may be located in a second cell, with the second cell being different than the first cell.

In some configurations, the uplink power control setting may be a PUCCH power control setting.

A UE for managing wireless communications is also described. In one configuration, the UE includes a means for compiling information relating to a scheduling request performance of a first set of one or more UEs, and a means for transmitting at least a subset of the information to trigger an identification of an adjustment of an uplink power control setting of a second set of one or more UEs.

In some embodiments, the UE may further include a means for receiving an adjusted nominal power value, and means for adjusting the uplink power control setting according to the adjusted nominal power value. In some embodiments, the UE may further include a means for receiving a power modification delta, and a means for adjusting the uplink power control setting according to the power modification delta. In some embodiments, the UE may further include a means for receiving a power modification instruction, and a means for maintaining the uplink power control setting according to the power modification instruction.

The means for compiling information relating to the scheduling request performance may include a means for determining whether a number of failed scheduling requests satisfies a threshold, and a means for, upon determining that the number of failed scheduling requests satisfies the threshold, transmitting an indication of a complete scheduling request failure.

In some embodiments, the second set of one or more UEs may include the first set of one or more UEs. In other embodiments, the first set of one or more UEs may be located in a first cell and the second set of one or more UEs may be located in a second cell, with the second cell being different than the first cell.

In some configurations, the uplink power control setting may be a PUCCH power control setting.

A computer program product for managing wireless communications is also described. The computer program product may comprise a non-transitory computer-readable medium storing instructions executable by a processor to compile information relating to a scheduling request performance of a first set of one or more UEs, and transmit at least a subset of the information to trigger an identification of an adjustment of an uplink power control setting of a second set of one or more UEs.

In some embodiments, the instructions may be further executable by the processor to receive an adjusted nominal power value and adjust the uplink power control setting according to the adjusted nominal power value. In some embodiments, the instructions may be further executable by the processor to receive a power modification delta and adjust the uplink power control setting according to the power modification delta. In some embodiments, the instructions may be further executable by the processor to receive a power modification instruction and maintain the uplink power control setting according to the power modification instruction.

Another method for managing wireless communications is described. In one configuration, information to trigger an identification of an adjustment of an uplink power control setting for transmitting scheduling requests is received from each of a first plurality of UEs. The information is analyzed, and a power adjustment is identified for the uplink power control setting for at least one of a second plurality of UEs. The identified power adjustment is then transmitted to the at least one of a second plurality of UEs.

In some embodiments, identifying the power adjustment may include identifying an adjusted nominal power value for the at least one of the second plurality of UEs, or identifying a power modification delta for the at least one of the second plurality of UEs.

The identified power adjustment may in some cases include an instruction for the at least one of the second plurality of UEs to increase a transmit power for uplink transmissions of scheduling requests or an instruction for the at least one of the second plurality of UEs to decrease a transmit power for uplink transmissions.

In some embodiments, the method may further include transmitting a request to a neighboring base station serving a neighboring cell to request the neighboring base station to instruct one or more UEs being served by the neighboring base station to reduce a transmit power for uplink transmissions to the neighboring base station.

In some cases, the method may include processing a MAC header field to extract the received information from at least one of the first plurality of UEs.

In some configurations, the information to trigger an identification of an adjustment of an uplink power control setting for transmitting scheduling requests may include information on scheduling request performance. In these configurations, analyzing the information received from the first plurality of UEs may include isolating, from the analysis, information on complete scheduling request failures. Analyzing the information received from the first plurality of UEs may also include classifying the information on scheduling request performance based at least in part on PUCCH format.

In some embodiments, the second plurality of UEs may include the first plurality of UEs.

In some embodiments, the power adjustment may be identified for each of the second plurality of UEs and transmitted to each of the second plurality of UEs.

A base station for managing wireless communications is also described. The base station may include a processor, and memory in electronic communication with the processor. Instructions may be stored in the memory. The instructions may be executable by the processor to receive, from each of a first plurality of UEs, information to trigger an identification of an adjustment of an uplink power control setting for transmitting scheduling requests. The instructions may be further executable by the processor to analyze the information received from the first plurality of UEs, identify a power adjustment for the uplink power control setting for at least one of a second plurality of UEs, and transmit the identified power adjustment to the at least one of the second plurality of UEs.

In some embodiments, the instructions to identify the power adjustment may be further executable by the processor to identify an adjusted nominal power value for the at least one of the second plurality of UEs, or identify a power modification delta for the at least one of the second plurality of UEs.

In some configurations, the instructions may be further executable by the processor to transmit a request to a neighboring base station serving a neighboring cell to request the neighboring base station to instruct one or more UEs being served by the neighboring base station to reduce a transmit power for uplink transmissions to the neighboring base station.

In some cases, the instructions may be further executable by the processor to process a MAC header field to extract the received information from at least one of the first plurality of UEs.

In some configurations, the information to trigger an identification of an adjustment of an uplink power control setting for transmitting scheduling requests may include information on scheduling request performance. In these configurations, the instructions to analyze the information received from the first plurality of UEs may be executable by the processor to isolate, from the analysis, information on complete scheduling request failures.

In some embodiments, the second plurality of UEs may include the first plurality of UEs.

In some embodiments, the power adjustment may be identified for each of the second plurality of UEs and transmitted to each of the second plurality of UEs.

Yet another base station for managing wireless communications is described. In one configuration, the base station includes a means for receiving, from each of a first plurality of UEs, information to trigger an identification of an adjustment of an uplink power control setting for transmitting scheduling requests. The base station also includes a means for analyzing the information received from the first plurality of UEs; a means for identifying a power adjustment for the uplink power control setting for at least one of a second plurality of UEs; and a means for transmitting the identified power adjustment to the at least one of the second plurality of UEs.

In some embodiments, the means for identifying the power adjustment may include a means for identifying an adjusted nominal power value for the at least one of the second plurality of UEs or a means for identifying a power modification delta for the at least one of the second plurality of UEs.

In some embodiments, the base station may further include a means for transmitting a request to a neighboring base station serving a neighboring cell to request the neighboring base station to instruct one or more UEs being served by the neighboring base station to reduce a transmit power for uplink transmissions to the neighboring base station.

In some embodiments, the base station may also include a means for processing a MAC header field to extract the received information from at least one of the first plurality of UEs.

A computer program product for managing wireless communications is also described. The computer program product may comprise a non-transitory computer-readable medium storing instructions executable by a processor to receive, from each of a first plurality of user equipments (UEs), information to trigger an identification of an adjustment of an uplink power control setting for transmitting scheduling requests. The instructions may be further executable by the processor to analyze the information received from the first plurality of UEs, identify a power adjustment for the uplink power control setting for at least one of a second plurality of UEs, and transmit the identified power adjustment to the at least one of the second plurality of UEs.

Further scope of the applicability of the described methods and apparatuses will become apparent from the following detailed description, claims, and drawings. The detailed description and specific examples are given by way of illustration only, since various changes and modifications within the scope of the description will become apparent to those skilled in the art.

BRIEF DESCRIPTION OF THE DRAWINGS

A further understanding of the nature and advantages of the present invention may be realized by reference to the following drawings. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

FIG. 1 shows a block diagram of a wireless communications system;
FIG. 2 shows a block diagram of a device that may be used to manage wireless communications in accordance with various embodiments;
FIG. 3 shows a block diagram of another device that may be used to manage wireless communications in accordance with various embodiments;
FIG. 4 shows a block diagram of yet another device that may be used to manage wireless communications in accordance with various embodiments;
FIG. 5 shows a block diagram of still another device that may be used to manage wireless communications in accordance with various embodiments;
FIG. 6 shows a block diagram of another device that may be used to manage wireless communications in accordance with various embodiments;
FIGS. 7-12 illustrate various examples of message flows between a UE and an eNB in accordance with various embodiments;
FIG. 13 is a block diagram of a MIMO communication system including an eNB and a UE;
FIG. 14 is a flowchart of a method for managing wireless communications in accordance with various embodiments;
FIG. 15 is a flowchart of a more detailed embodiment of the method shown in FIG. 14;
FIG. 16 is a flowchart of another more detailed embodiment of the method shown in FIG. 14; and
FIG. 17 is a flowchart of another method for managing wireless communications in accordance with various embodiments.

DETAILED DESCRIPTION

Management of wireless communications using information relating to scheduling request (SR) performance of one or more user equipments (UEs) is described. When a UE desires to initiate a communication via an uplink, the UE may send an SR to an eNodeB (eNB). Upon receiving the SR, the eNB may allocate resources for an "uplink grant". However, factors such as the location of the UE within the coverage area of an eNB, the power level at which the UE sends the SR, network congestion, and other factors can result in the SR not being received by the eNB. Because the eNB has no knowledge of a failed SR (e.g., a SR not being received by the eNB), the eNB cannot make adjustments to mitigate the likelihood of further failures. It is therefore possible that a UE experiencing poor SR performance will continue to experience poor SR performance, and/or UEs experiencing the same set of conditions will also experience poor SR performance. When a UE sends multiple SRs that fail, it may not only provide a poor user experience, but it may drain battery power as the UE initiates multiple SRs in succession. Methods, systems, and devices that may increase the likelihood that a UE's SRs will be received by an eNB are therefore desirable.

Thus, the following description provides examples, and is not limiting of the scope, applicability, or configuration set forth in the claims. Changes may be made in the function and arrangement of elements discussed without departing from the scope of the disclosure. Various embodiments may omit, substitute, or add various procedures or components as appropriate. For instance, the methods described may be performed in an order different from that described, and various steps may be added, omitted, or combined. Also, features described with respect to certain embodiments may be combined in other embodiments.

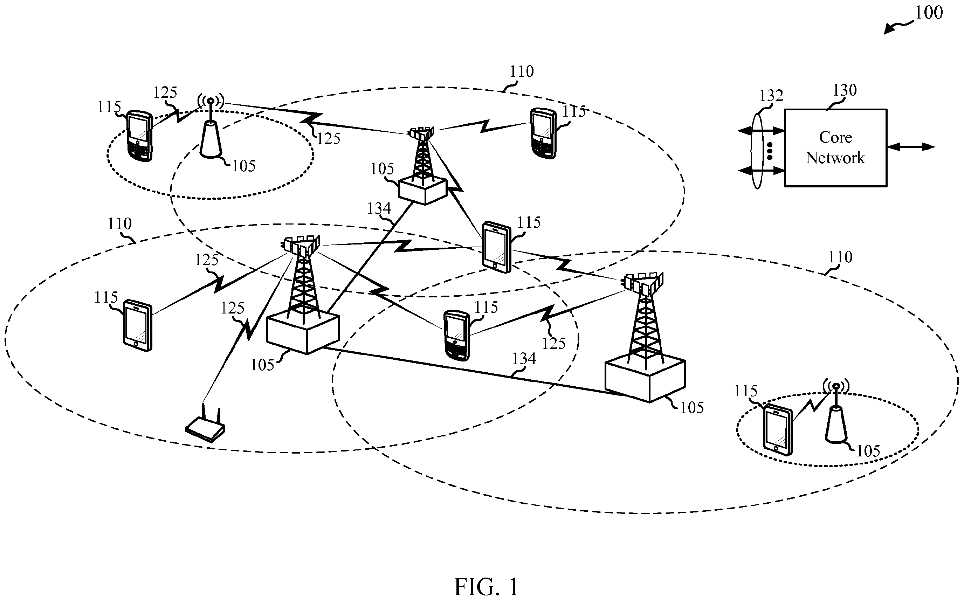

Referring first to **FIG. 1,** a diagram illustrates an example of a wireless communications system 100. The system 100 includes base stations (or cells) 105, communication devices 115, and a core network 130. The base stations 105 may communicate with the communication devices 115 under the control of a base station controller (not shown), which may be part of the core network 130 or the base stations 105. Base stations 105 may communicate control information and/or user data with the core network 130 through backhaul links 132. The base stations 105 may communicate, either directly or indirectly, with each other over backhaul links 134, which may be wired or wireless communication links. The system 100 may support operation on multiple carriers (waveform signals of different frequencies). Multi-carrier transmitters can transmit modulated signals simultaneously on the multiple carriers. For example, each communication link 125 may be a multi-carrier signal modulated according to the various radio technologies described above. Each modulated signal may be sent on a different carrier and may carry control information (*e.g.*, reference signals, control channels, etc.), overhead information, data, etc.

The base stations 105 may wirelessly communicate with the devices 115 via one or more base station antennas. Each of the base station 105 sites may provide communication coverage for a respective geographic area 110. A base station 105 may be referred to as a base transceiver station, a radio base station, an access point, a radio transceiver, a basic service set (BSS), an extended service set (ESS), a NodeB, an eNodeB (eNB), a Home NodeB, a Home eNodeB, or some other suitable terminology. The coverage area 110 for a base station may be divided into sectors making up only a portion of the coverage area (not shown). The system 100 may include base stations 105 of different types (e.g., macro, micro, and/or pico base stations). There may be overlapping coverage areas for different technologies.

The system 100 may be an LTE/LTE-A network. In LTE/LTE-A networks, the terms evolved Node B (eNB) and user equipment (UE) may be generally used to describe the base stations 105 and communication devices 115, respectively. The system 100 may be a Heterogeneous LTE/LTE-A network in which different types of eNBs provide coverage for various geographical regions. For example, each eNB 105 may provide communication coverage for a macro cell, a pico cell, a femto cell, and/or other types of cell. A macro cell generally covers a relatively large geographic area (e.g., several kilometers in radius) and may allow unrestricted access by UEs with service subscriptions with the network provider. A pico cell would generally cover a relatively smaller geographic area and may allow unrestricted access by UEs with service subscriptions with the network provider. A femto cell would also generally cover a relatively small geographic area (e.g., a home) and, in addition to unrestricted access, may also provide restricted access by UEs having an association with the femto cell (e.g., UEs in a closed subscriber group (CSG), UEs for users in the home, and the like). An eNB for a macro cell may be referred to as a macro eNB. An eNB for a pico cell may be referred to as a pico eNB. And, an eNB for a femto cell may be referred to as a femto eNB or a home eNB. An eNB may support one or multiple (e.g., two, three, four, and the like) cells.

The core network 130 may communicate with the eNBs 105 via a backhaul 132 (e.g., S1, etc.). The eNBs 105 may also communicate with one another, e.g., directly or indirectly via backhaul links 134 (e.g., X2, etc.) and/or via backhaul links 132 (e.g., through core network 130). The wireless network 100 may support synchronous or asynchronous operation. For synchronous operation, the eNBs may have similar frame timing, and transmissions from different eNBs may be approximately aligned in time. For asynchronous operation, the eNBs may have different frame timing, and transmissions from different eNBs may not be aligned in time. The techniques described herein may be used for either synchronous or asynchronous operations.

The UEs 115 are dispersed throughout the wireless network 100, and each UE may be stationary or mobile. A UE 115 may also be referred to by those skilled in the art as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminology. A UE 115 may be a cellular phone, a personal digital assistant (PDA), a wireless modem, a wireless communication device, a handheld device, a tablet computer, a laptop computer, a cordless phone, a wireless local loop (WLL) station, or the like. A UE may be able to communicate with macro eNBs, pico eNBs, femto eNBs, relays, and the like.

The transmission links 125 shown in network 100 may include uplink (UL) transmissions from a UE 115 to an eNB 105, and/or downlink (DL) transmissions, from an eNB 105 to a UE 115. The downlink transmissions may also be called forward link transmissions, while the uplink transmissions may also be called reverse link transmissions.

In a LTE/LTE-A network, a UE 115 that desires to initiate an uplink transmission may send a scheduling request (SR) to an eNB 105. The SR alerts the eNB 105 that resources are requested to be allocated for the uplink transmission. The SR may be sent over a physical uplink control channel (PUCCH) using, for example, format 1 or format 1a/1b. In some cases, the UE's SR may not be received by the eNB 105. The non-receipt may be due to various reasons, such as inadequate PUCCH power or network congestion. When a UE 115 fails to receive a grant of uplink resources (an "uplink grant") after a predetermined time, the UE 115 may send another SR. This process may continue until an uplink grant is received, or until a failure is indicated (e.g., by the UE 115 having made a maximum number of attempts to obtain an uplink grant.). Because the eNB 105 is unaware of the failed SRs (i.e., because it does not receive them), the eNB 105 is unable to make an adjustment to improve its chances of receiving SRs.

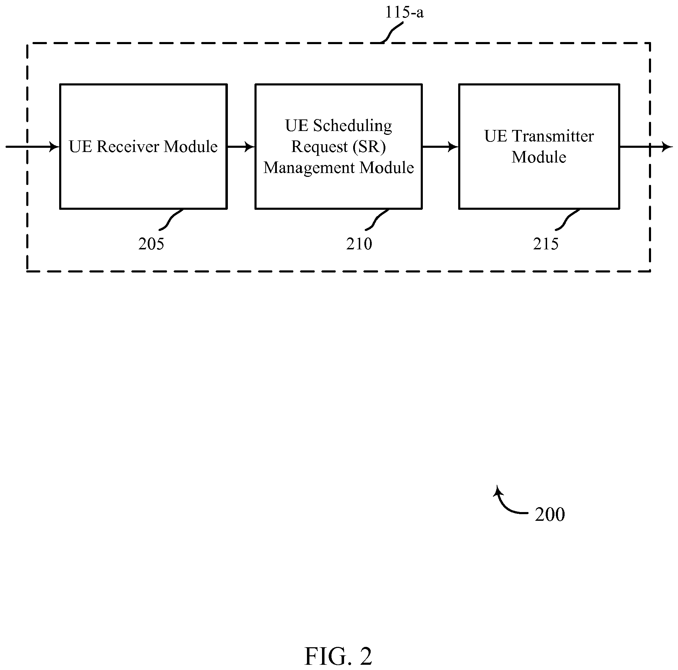

Referring now to **FIG. 2,** a block diagram 200 illustrates an example of a UE 115-a that may be used to manage wireless communications and increase the likelihood that the UE's SRs will be received by an eNB 105, in accordance with various embodiments. The UE 115-a may be an example of one or more aspects of the UEs 115 described with reference to FIG. 1. The UE 115-a may include a UE receiver module 205, a UE SR management module 210, and/or a UE transmitter module 215. Each of these components may be in communication with each other.

The components of the UE 115-a may, individually or collectively, be implemented with one or more application-specific integrated circuits (ASICs) adapted to perform some or all of the applicable functions in hardware. Alternatively, the functions may be performed by one or more other processing units (or cores), on one or more integrated circuits. Other types of integrated circuits may be used (*e.g.*, Structured/Platform ASICs, Field Programmable Gate Arrays (FPGAs), and other Semi-Custom ICs), which may be programmed in any manner known in the art. The functions of each unit may also be implemented, in whole or in part, with instructions embodied in a memory, formatted to be executed by one or more general or application-specific processors.

The UE receiver module 205 may be a cellular receiver, and in some cases may be a LTE/LTE-A receiver. The UE receiver module 205 may be used to receive various types of data and/or control signals over a wireless communications system such as the wireless communications system 100 shown in FIG. 1. The data and/or control signals may include signals indicating the availability of resources for an uplink grant.

The UE transmitter module 215 may also be a cellular transmitter, and in some cases may be a LTE/LTE-A transmitter. The UE transmitter module 215 may be used to transmit various types of data and/or control signals over a wireless communications system such as the wireless communications system 100. The data and/or control signals may include SRs.

The UE SR management module 210 may cause a number of SRs to be sent via the UE transmitter module 215, until such time that an uplink grant is received via the UE receiver module 205. For each failed SR, the UE SR management module 210 may compile information relating to SR performance, such as a count of failed SRs, a count of failed SRs per uplink grant, a condition or conditions that may have caused a failed SR, or other information relating to SR performance. The UE SR management module 210 may then transmit at least a subset of the compiled information to an eNB 105 or other device, via the UE transmitter module 215, to trigger an identification of an adjustment of an uplink power control setting.

The transmitted information may be transmitted in a Media Access Control (MAC) header field of a MAC layer. The transmitted information may be transmitted in a higher layer, such as in one or more information elements, through non-access stratum (NAS) messages, or as application data.

The adjustment of the uplink power control setting may take various forms, including that of an adjusted nominal power value or a power modification delta. A nominal power value impacts the starting power of an SR transmission or control channel, while a power modification delta specifies an incremental change in the power of the SR transmission or control channel. In some cases, the power control setting may be a PUCCH power control setting. Power used by a UE 115 may be defined as follows:

$$P_{PUCCH}(i) = \min\{P_{CMAX}, P_{0_{PUCCH}} + PL + h(n_{CQI}, n_{HARQ}) + \Delta_{F_{PUCCH}}(F) + g(i)\}$$

where $P_{0_{PUCCH}}$ is a nominal or base power, PL is a path loss, $\Delta_{F_{PUCCH}}(F)$ is a power modification delta, and $g(i)$ is a variable that may be increased or decreased using TPC or other power modification instructions. In contrast to the variable $g(i)$, the power control parameters $P_{0_{PUCCH}}$ and $\Delta_{F_{PUCCH}}(F)$ can provide larger adjustments to power control settings.

In another example, the power control setting may be associated with interference control. For example, the eNB 105 may instruct other UEs it is serving to reduce their uplink transmit. power. As a result, the interference caused by these other UEs may allow the SR performance of the UE 115-a to improve. Further, the eNB 105 may communicate with neighboring eNBs requesting that they instruct the UEs they are serving in neighboring cells to reduce their uplink transmit power. This may also reduce interference caused by neighboring cells and allow the UE 115-a (and other UEs) in the serving cell to improve their SR performance.

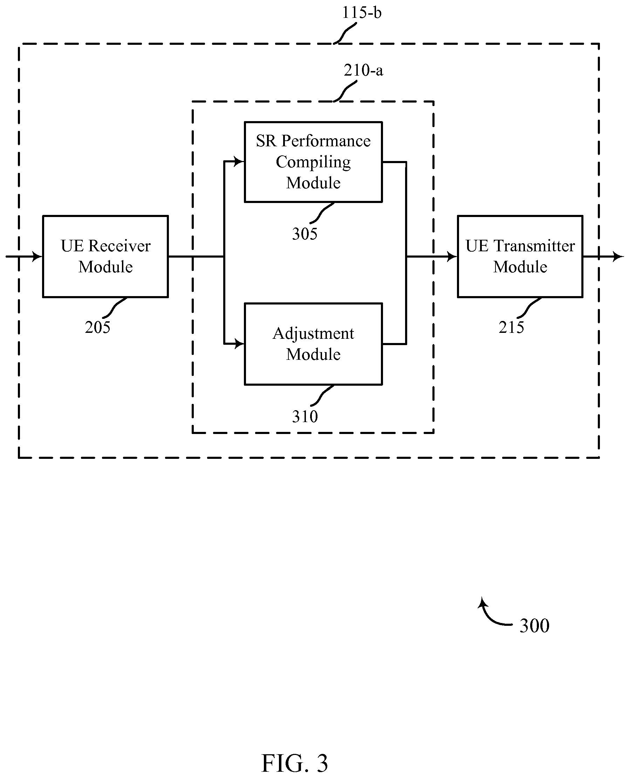

**FIG. 3** is a block diagram 300 illustrating another example of a UE 115-b that may be used to manage wireless communications, in accordance with various embodiments. The UE 115-b may be an example of one or more aspects of the UEs 115 described with reference to FIGS. 1 and/or 2. The UE 115-b may include a UE receiver module 205, a UE SR management module 210-a, and/or a UE transmitter module 215. Each of these components may be in communication with each other.

The components of the UE 115-b may, individually or collectively, be implemented with one or more application-specific integrated circuits (ASICs) adapted to perform some or all of the applicable functions in hardware. Alternatively, the functions may be performed by one or more other processing units (or cores), on one or more integrated circuits. Other types of integrated circuits may be used (*e.g.*, Structured/Platform ASICs, Field Programmable ASICs, Field Programmable Gate Arrays (FPGAs), and other Semi-Custom ICs), which may be programmed in any manner known in the art. The functions of each unit may also be implemented, in whole or in part, with instructions embodied in a memory, formatted to be executed by one or more general or application-specific processors.

The UE receiver module 205 and UE transmitter module 215 may be configured similarly to what is described with respect to FIG. 2. The UE SR management module 210-a may include an SR performance compiling module 305 and/or an adjustment module 310. The SR performance compiling module 305 may compile information relating to an SR performance of a first set of one or more UEs 115. The adjustment module 310 may transmit at least a subset of the information to trigger an identification of an adjustment of an uplink power control setting of a second set of one or more UEs. In some embodiments, a UE 115-b may be a member of one or both of the first and second sets. Thus, in some embodiments, information relating to SR performance may be compiled for the UE 115-b, and in other embodiments, information relating to SR performance may not be compiled for the UE 115-b. Also, in some embodiments, the adjustment module 310 may transmit information to trigger an identification of an adjustment of an uplink power control setting of the UE 115-b (or group of UEs), and in other embodiments, the adjustment module 310 may not transmit information to trigger the identification of an adjustment of an uplink power control setting of the UE 115-b.

In some cases, the first set of one or more UEs may be located in a first cell (i.e., in a coverage area of a first eNB) and the second set of one or more UEs may be located in a second cell, different from the first cell. In this manner, compiled information relating to SR performance in one cell may be used to adjust an uplink power control setting of one or more UEs in a second cell.

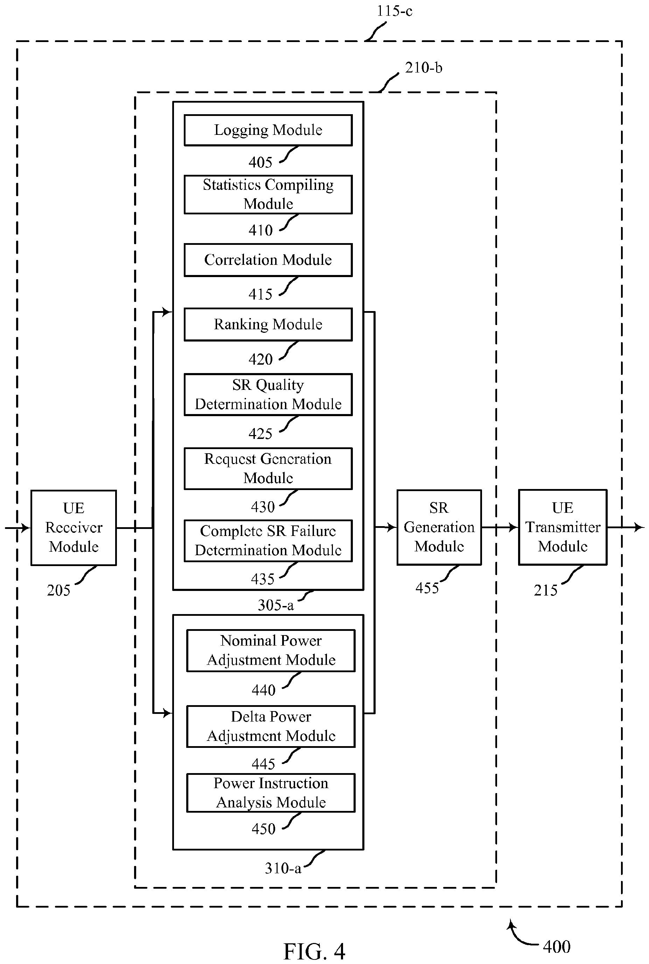

**FIG. 4** is a block diagram 400 illustrating yet another example of a UE 115-c that may be used to manage wireless communications, in accordance with various embodiments. The UE 115-c may be an example of one or more aspects of the UEs 115 described with reference to FIGS. 1, 2, and/or 3. The UE 115-c may include a UE receiver module 205, a UE SR management module 210-b, and/or a UE transmitter module 215. Each of these components may be in communication with each other.

The components of the UE 115-c may, individually or collectively, be implemented with one or more application-specific integrated circuits (ASICs) adapted to perform some or all of the applicable functions in hardware. Alternatively, the functions may be performed by one or more other processing units (or cores), on one or more integrated circuits. Other types of integrated circuits may be used (*e.g.*, Structured/Platform ASICs, Field Programmable Gate Arrays (FPGAs), and other Semi-Custom ICs), which may be programmed in any manner known in the art. The functions of each unit may also be implemented, in whole or in part, with instructions embodied in a memory, formatted to be executed by one or more general or application-specific processors.

The UE receiver module 205 and UE transmitter module 215 may be configured similarly to what is described with respect to FIG. 2. The UE SR management module 210-b may include an SR performance compiling module 305-a, an adjustment module 310-a, and/or an SR generation module 455. The SR performance compiling module 305-a may further include a logging module 405, a statistics compiling module 410, a correlation module 415, a ranking module 420, an SR quality determination module 425, a request generation module 430, and/or a complete SR failure determination module 435.

The logging module 405 may log a number of failed scheduling requests preceding a successful scheduling request. The statistics compiling module 410 may compile statistics on a number of failed SRs of each of a first set of one or more UEs preceding different ones of a plurality of successful SRs of each of the first set of one or more UEs. In some cases, the statistics compiling module 410 may determine an average or median number of failed scheduling requests preceding a successful SR of each UE (or of the UEs as a set).

In some embodiments, SRs may b sent/transmitted by a UE using PUCCH format 1 or PUCCH format 1a/1b. In these embodiments, it may be useful to log failed SRs and compile statistics for each PUCCH format, to enable better identification of an appropriate adjustment of an uplink power control setting for the PUCCH.

The correlation module 415 may correlate at least one failed SR with at least one radio frequency (RF) measurement. For example, a failed SR may be correlated with reference signal received power (RSRP), reference signal received quality (RSRQ), path loss or any other radio frequency (RF) measurement. The correlation module 415 may also correlate at least one failed SR with a PUCCH format

The ranking module 420 may rank items of compiled information based on a reliability level associated with each item. A subset of higher ranked items may then be selected for transmission to cause the adjustment of the power control setting. For example, SR failures of UEs on an edge of a area covered by an eNB may be assigned a lower ranking than SR failures that occur for UEs that are closer to the eNB.

The SR quality determination module 425 may determine a quality level of an SR performance. For example, the SR quality determination module 425 may determine whether SR performance is good, bad, or somewhere in the middle. In some embodiments, SR performance may be deemed "good" when the average number of SR failures before obtaining an uplink grant is below a predetermined number. Otherwise, SR performance may be deemed "bad". In the case of a binary quality decision, such as a decision between "good" and "bad", the quality level may be represented in a single bit of information. In some cases, this single bit of information may be the subset of information transmitted by the adjustment module 310-a.

In some embodiments, the request generation module 430 may generate an uplink power control setting adjustment request. The request may, in some cases, be based at least in part on a determined quality level of the SR performance. The request may also be the subset of information that is transmitted to trigger the identification of an adjustment of an uplink power control setting of one or more UEs. In one embodiment, one or more the UEs may process the compiled information to determine whether their respective SR performance is acceptable or unacceptable. In another embodiment, the information may be transmitted to the eNB 105, and the eNB 105 may process the information to access the quality of the SR performances of the UEs.

The complete SR failure identification module 435 may determine whether a number of failed SRs satisfies a threshold and, upon determining that the number of failed scheduling requests satisfies the threshold, transmit an indication of a complete scheduling request failure. A complete scheduling request failure may occur when a UE 115 is out-of-range of a base station or defective, or under extreme interference conditions. Identifying or isolating complete SR failures may help provide a better view of SR performance.

The adjustment module 310-a may include a nominal power adjustment module 440, a delta power adjustment module 445, and/or a power instruction analysis module 450. The nominal power adjustment module 440 may be configured to receive an adjusted nominal power value via the UE receiver module 205 and adjust the uplink power control setting according to the adjusted nominal power value. The delta power adjustment module 445 may be configured to receive a power modification delta via the UE receiver module 205 and adjust the uplink power control setting according to the power modification delta. The power instruction analysis module 450 may be configured to receive a power modification instruction via the UE receiver module 205 and maintain an uplink power control setting according to the power modification instruction.

The SR generation module 455 may be configured to generate new SRs and send them over a network via the UE transmitter module 215.

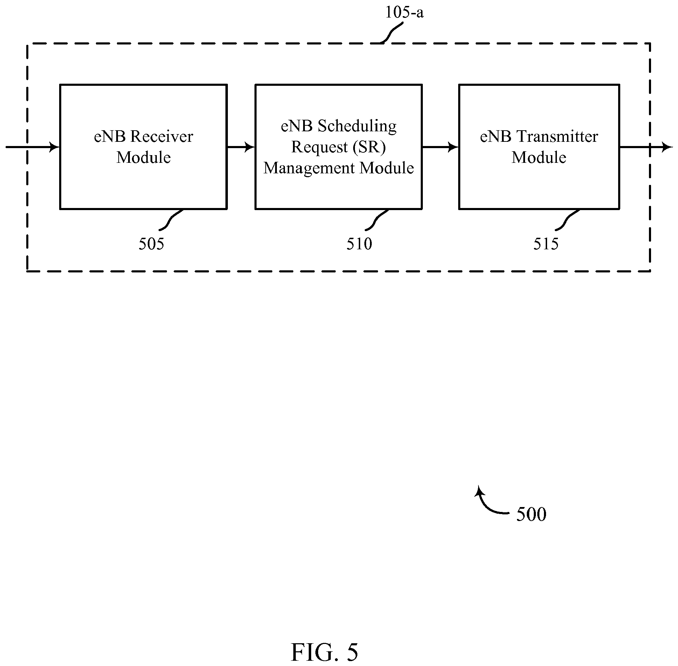

Referring now to **FIG. 5,** a block diagram 500 illustrates an eNB 105-a that may be used to manage wireless communications and increase the likelihood that a UE's SRs will be received by the eNB 105-a. The eNB 105-a may be an example of one or more aspects of the eNBs 105 described with reference to FIG. 1. The eNB 105-a may include an eNB receiver module 505, an eNB SR management module 510, and/or an eNB transmitter module 515. Each of these components may be in communication with each other.

The components of the eNB 105-a may, individually or collectively, be implemented with one or more application-specific integrated circuits (ASICs) adapted to perform some or all of the applicable functions in hardware. Alternatively, the functions may be performed by one or more other processing units (or cores), on one or more integrated circuits. Other types of integrated circuits may be used (*e.g.*, Structured/Platform ASICs, Field Programmable Gate Arrays (FPGAs), and other Semi-Custom ICs), which may be programmed in any manner known in the art. The functions of each unit may also be implemented, in whole or in part, with instructions embodied in a memory, formatted to be executed by one or more general or application-specific processors.

The eNB receiver module 505 may be a cellular receiver, and in some cases may be a LTE/LTE-A receiver. The eNB receiver module 505 may be used to receive various types of data and/or control signals over a wireless communications system such as the wireless communications system 100 shown in FIG. 1. The data and/or control signals may include SRs that request availability of resources for an uplink grant. In some cases, the eNB receiver module 505 may process MAC header fields to extract information received from each of a plurality of UEs.

The eNB transmitter module 515 may also be a cellular transmitter, and in some cases may be a LTE/LTE-A transmitter. The eNB transmitter module 515 may be used to transmit various types of data and/or control signals over a wireless communications system such as the wireless communications system 100. The data and/or control signals may include uplink grants.

The eNB SR management module 510 may be configured to receive, via the eNB receiver module 505, and from each of a first plurality of UEs, information to trigger an identification of an adjustment of an uplink power control setting for transmitting SRs. The eNB SR management module 510 may also be configured to analyze the received information and identify a power adjustment for the uplink power control setting for at least one of a second plurality of UEs 115. The eNB SR management module 510 may be further configured to transmit, via the eNB transmitter module 515, the identified power adjustment to the at least one of the second plurality of UEs 115. The at least one of the second plurality of UEs 115 for which the power adjustment is identified may or may not include one or more of the first plurality of UEs from which information to trigger an identification of an adjustment of an uplink power control setting for transmitting SRs is received.

The eNB 105-a may be used to adjust or optimize the power for transmitting SR requests across a wireless communications system (e.g., instead of adjusting or optimizing power for only a single device that may be determined to have difficulty transmitting SR requests).

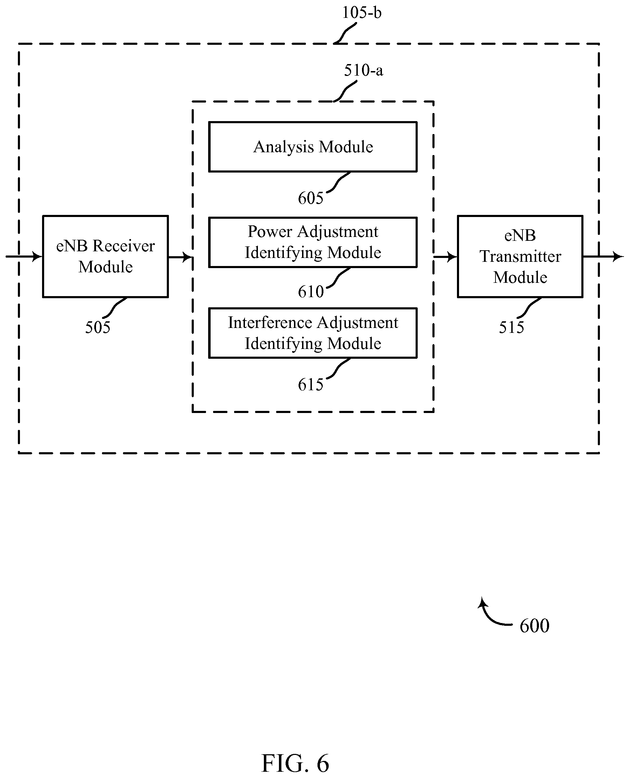

**FIG. 6** is a block diagram 600 illustrating another example of an eNB 105-b that may be used to manage wireless communications. The eNB 105-b may be an example of one or more aspects of the eNBs 105 described with reference to FIGS. 1 and/or 5. The eNB 105-b may include an eNB receiver module 505, an eNB SR management module 510-a, and/or an eNB transmitter module 515. Each of these components may be in communication with each other.

The components of the eNB 105-b may, individually or collectively, be implemented with one or more application-specific integrated circuits (ASICs) adapted to perform some or all of the applicable functions in hardware. Alternatively, the functions may be performed by one or more other processing units (or cores), on one or more integrated circuits. Other types of integrated circuits may be used (*e.g.*, Structured/Platform ASICs, Field Programmable Gate Arrays (FPGAs), and other Semi-Custom ICs), which may be programmed in any manner known in the art. The functions of each unit may also be implemented, in whole or in part, with instructions embodied in a memory, formatted to be executed by one or more general or application-specific processors.

The eNB receiver module 505 and eNB transmitter module 515 may be configured similarly to what is described with respect to FIG. 5. The eNB SR management module 510-a may include an analysis module 605, a power adjustment identifying module 610, and/or an interference adjustment identifying module 615. The analysis module 605 may be configured to receive, via the eNB receiver module and from each of a first plurality of UEs, information to trigger an identification of an adjustment of an uplink power control setting for transmitting SRs. In some cases, the information may include information on scheduling request performance, such as the number of failed scheduling requests preceding a successful scheduling request, or the average number of failed scheduling requests preceding successful scheduling requests. The analysis module 605 may also be configured to analyze the received information. This may be done, for example, by determining a statistical distribution of the received information across all of the plurality of UEs. In some cases, information on complete scheduling request failures may be isolated from the analysis performed by the analysis module 605. The information on complete scheduling request failures may be isolated from the analysis because, for example, a complete scheduling request failure tends to be due to a functional problem or extreme interference conditions, so isolating these instances from the analysis can provide a better indication of the wireless communications system performance (e.g., network performance) that can actually be improved.

In some cases, the information on scheduling request performance may be classified based at least in part on a PUCCH format associated with each scheduling request. In these cases, the analysis module 605 may perform its analysis based on these classifications. For example, the analysis module 605 could conduct its analysis per PUCCH format (e.g., for format 1 or for format 1a/1b).

The power adjustment identifying module 610 may be configured to receive the analysis from the analysis module 605 and identify a power adjustment for the uplink power control setting for at least one of a second plurality of UEs 115. The identified power adjustment may be, for example, an adjusted nominal power value, a power modification delta, or a power modification instruction, such as an instruction to increase a transmit power for uplink transmissions of scheduling requests or an instruction to decrease a transmit power for uplink transmissions of scheduling requests. The power adjustment identifying module 610 may be further configured to transmit the identified power adjustment to the at least one of the second plurality of UEs 115 via the eNB transmitting module 515.

The interference adjustment identifying module 615 may be configured to receive the analysis from the analysis module 605 and adjust the interference from particular UEs that may or may not be associated with its respective eNB. For example, the interference adjustment identifying module 615 may determine from the analysis provided by the analysis module 605 that the SR transmission from particular UEs associated with its respective eNB are interfering with the SR transmissions from at least one other UE. The interference adjustment identifying module 615 may then instruct the UEs with interfering transmissions to reduce a transmit power for uplink transmission to the eNB, thereby reducing the interference for the at least one other UE. As another example, the interference adjustment identifying module 615 may determine from the analysis provided by the analysis module 605 that the SR transmissions from particular UEs associated with a neighboring eNB are interfering with the SR transmissions from at least one other UE. More particularly, the interference adjustment identifying module 615 may transmit a request to a neighboring eNB serving a neighboring cell to request the neighboring eNB to instruct one or more UEs being served by the neighboring eNB to reduce a transmit power for uplink transmissions to the neighboring eNB.

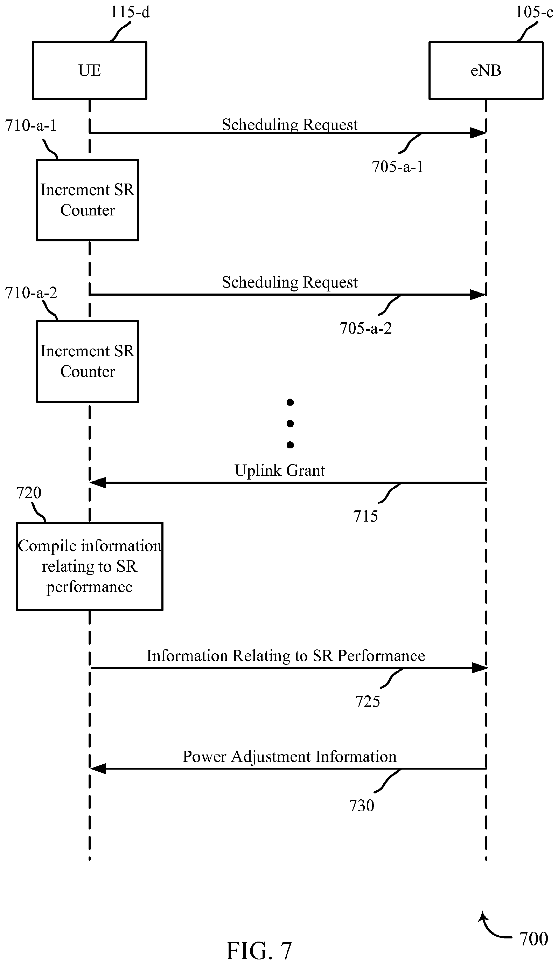

FIGS. 7-12 illustrate various examples of message flows between a UE and an eNB in accordance with various embodiments. The UE may be an example of one of the UEs 115 shown in FIG. 1, 2, 3, and/or 4. The eNB may be an example of one of the eNBs 105 shown in FIG. 1, 5, and/or 6.

Referring first to **FIG. 7,** there is shown a flow diagram 700. In accord with an exemplary message flow, a first SR 705-a-1 is sent from a UE 115-d to an eNB 105-c. However, the SR 705-a-1 may not be received by the eNB 105-c, and after a predetermined time, the UE 115-d may increment an SR counter at block 710-a-1. The UE 115-d may then send a second SR 705-a-2 to the eNB 105-c. The SR 705-a-2 may also not be received by the eNB 105-c, and after a predetermined time, the UE 115-d may increment the SR counter again, at block 710-a-2. This process may continue until, for example, some predetermined maximum number of attempts to obtain an uplink grant have been made.

After some arbitrary number of SRs have been sent, an uplink grant 715 may be received. Note that in some cases, however, the uplink grant 715 may not be received. Upon receiving the uplink grant 715 or having sent a maximum number of SRs, information relating to SR performance may be compiled at block 720. The information may be compiled, for example, as described with reference to FIG. 2, 3, and/or 4. The information relating to SR performance 725 may then be sent to the eNB 105-c or some other device. The information relating to SR performance 725 may be sent upon the UE 115-d initiating its sending (e.g., upon the UE 115-d requesting and receiving an uplink grant), or upon receiving a request for the information from the eNB 105-c. The information relating to SR performance 725 may also be sent, in some cases, upon determining that the information exceeds a relevancy threshold (e.g., the SR performance is sufficiently poor). In other cases, the information relating to SR performance 725 may be sent regardless of what it indicates about SR performance.

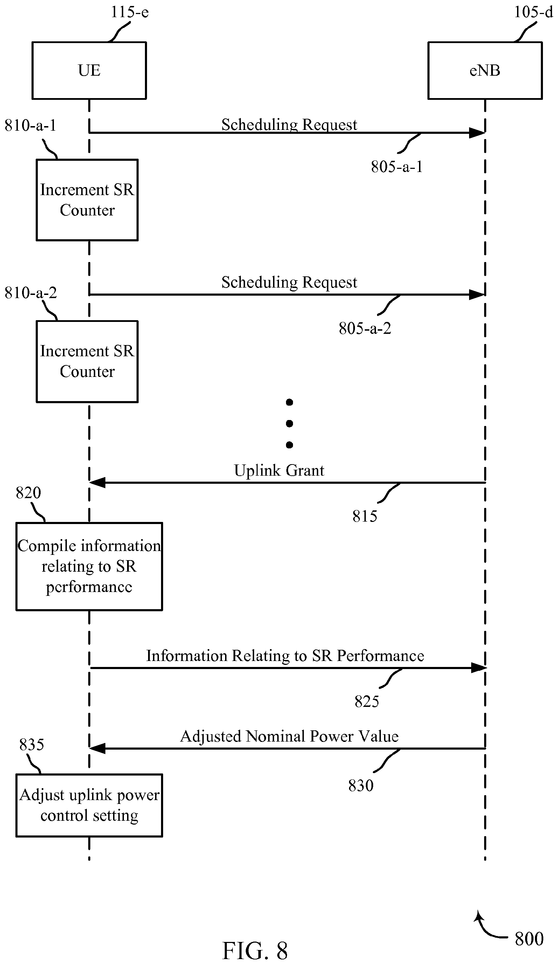

Referring next to **FIG. 8,** there is shown another flow diagram 800. In accord with an exemplary message flow, a first SR 805-a-1 is sent from the UE 115-e to an eNB 105-d. However, the SR 805-a-1 is not received by the eNB 105-d, and after a predetermined time, the UE 115-e increments an SR counter at block 810-a-1. The UE 115-e then sends a second SR 805-a-2 to the eNB 105-d. The SR 805-a-2 is also not received by the eNB 105-d, and after a predetermined time, the UE 115-e increments the SR counter again, at block 810-a-2. This process may continue until, for example, some predetermined maximum number of attempts to obtain an uplink grant have been made.

After some arbitrary number of SRs have been sent, an uplink grant 815 may be received. Note that in some cases, however, the uplink grant 815 may not be received. Upon receiving the uplink grant 815 or having sent a maximum number of SRs, information relating to SR performance may be compiled at block 820. The information may be compiled, for example, as described with reference to FIG. 2, 3, or 4. The information relating to SR performance 825 may then be sent to the eNB 105-d or some other device. The information relating to SR performance 825 may be sent upon the UE 115-e initiating its sending (e.g., upon the UE 115-e requesting and receiving an uplink grant), or upon receiving a request for the information from the eNB 105-d. The information relating to SR performance 825 may also be sent, in some cases, upon determining that the information exceeds a relevancy threshold (e.g., the SR performance is sufficiently poor). In other cases, the information relating to SR performance 825 may be sent regardless of what it indicates about SR performance. In response to the information relating to SR performance being received and analyzed by the eNB 105-d, and possibly in response to the information being analyzed in combination with SR performance received from other UEs 115, the UE 115-e and/or a number of other UEs 115 may receive an adjusted nominal power value. 830. The UE(s) may then adjust an uplink power control setting using the adjusted nominal power value 830 at block 835. In this manner, and by way of example, a UE may be able to send its SRs at a higher power, thereby increasing the likelihood that an SR will be received at the eNB 105-d after fewer attempts to obtain an uplink grant.

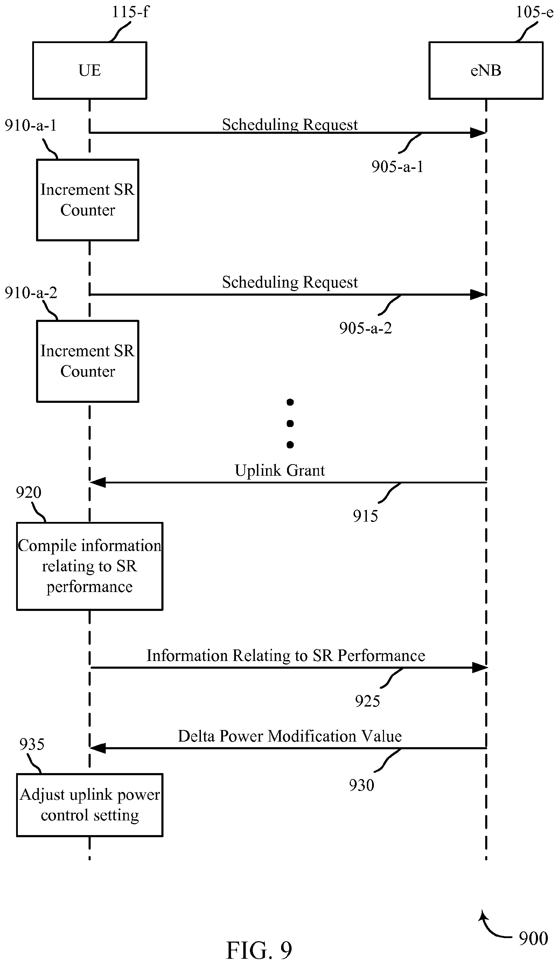

Turning now to **FIG. 9,** there is shown another flow diagram 900. In accord with an exemplary message flow, a first SR 905-a-1 is sent from the UE 115-f to an eNB 105-e. However, the SR 905-a-1 is not received by the eNB 105-e, and after a predetermined time, the UE 115-f increments an SR counter at block 910-a-1. The UE 115-f then sends a second SR 905-a-2 to the eNB 105-e. The SR 905-a-2 is also not received by the eNB 105-e, and after a predetermined time, the UE 115-f increments the SR counter again, at block 910-a-2. This process may continue until, for example, some predetermined maximum number of attempts to obtain an uplink grant have been made.

After some arbitrary number of SRs have been sent, an uplink grant 915 may be received. Note that in some cases, however, the uplink grant 915 may not be received. Upon receiving the uplink grant 915 or having sent a maximum number of SRs, information relating to SR performance may be compiled at block 920. The information may be compiled, for example, as described with reference to FIG. 2, 3, or 4. The information relating to SR performance 925 may then be sent to the eNB 105-e or some other device. The information relating to SR performance 925 may be sent upon the UE 115-f initiating its sending (e.g., upon the UE 115-f requesting and receiving an uplink grant), or upon receiving a request for the information from the eNB 105-e. The information relating to SR performance 925 may also be sent, in some cases, upon determining that the information exceeds a relevancy threshold (e.g., the SR performance is sufficiently poor). In other cases, the information relating to SR performance 925 may be sent regardless of what it indicates about SR performance. In response to the information relating to SR performance being received and analyzed by the eNB 105-e, and possibly in response to the information being analyzed in combination with SR performance received from other UEs 115, the UE 115-f and/or a number of other UEs 115 may receive a delta power modification value 930 (e.g., an indication of the delta by which the UE 115-f should increase or decrease its power for sending SRs. The UE(s) may then adjust an uplink power control setting using the delta power modification value 930 at block 935. In this manner, and by way of example, a UE may be able to send its SRs at a higher power, thereby increasing the likelihood that an SR will be received at the eNB 105-e after fewer attempts to obtain an uplink grant.

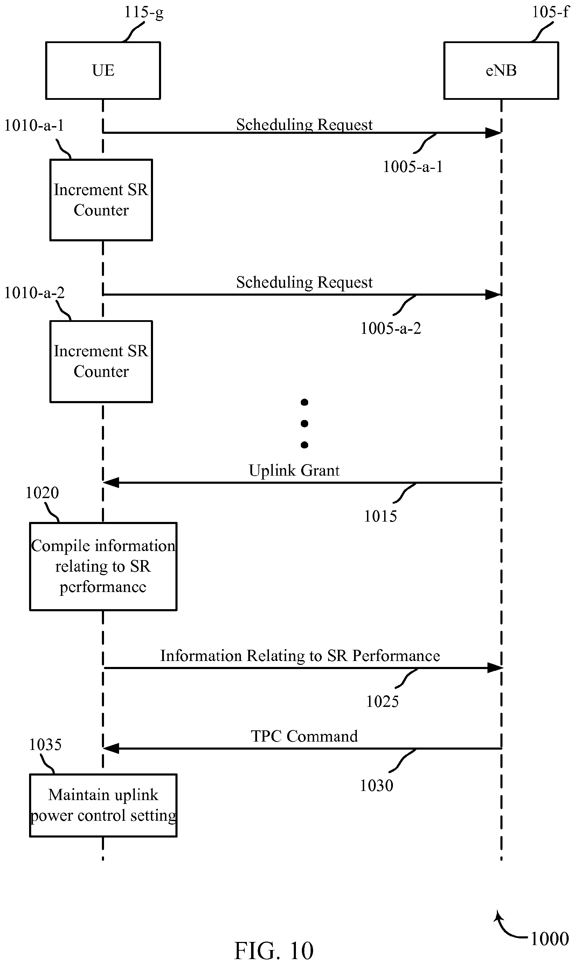

Referring to **FIG. 10,** there is shown another flow diagram 1000. In accord with an exemplary message flow, a first SR 1005-a-1 is sent from the UE 115-g to an eNB 105-f. However, the SR 1005-a-1 is not received by the eNB 105-f, and after a predetermined time, the UE 115-g increments an SR counter at block 1010-a-1. The UE 115-g then sends a second SR 1005-a-2 to the eNB 105-f. The SR 1005-a-2 is also not received by the eNB 105-f, and after a predetermined time, the UE 115-g increments the SR counter again, at block 1010-a-2. This process may continue until, for example, some predetermined maximum number of attempts to obtain an uplink grant have been made.

After some arbitrary number of SRs have been sent, an uplink grant 1015 may be received. Note that in some cases, however, the uplink grant 1015 may not be received. Upon receiving the uplink grant 1015 or having sent a maximum number of SRs, information relating to SR performance may be compiled at block 1020. The information may be compiled, for example, as described with reference to FIG. 2, 3, or 4. The information relating to SR performance 1025 may then be sent to the eNB 105-f or some other device. The information relating to SR performance 1025 may be sent upon the UE 115-g initiating its sending (e.g., upon the UE 115-g requesting and receiving an uplink grant), or upon receiving a request for the information from the eNB 105-f. The information relating to SR performance 1025 may also be sent, in some cases, upon determining that the information exceeds a relevancy threshold (e.g., the SR performance is sufficiently poor). In other cases, the information relating to SR performance 1025 may be sent regardless of what it indicates about SR performance. In response to the information relating to SR performance being received and analyzed by the eNB 105-f, and possibly in response to the information being analyzed in combination with SR performance received from other UEs 115, the UE 115-g and/or a number of other UEs may receive a transmit power control (TPC) command 1030. The UE(s) may then adjust an uplink power control setting based on the TPC command 1030 at block 1035. In this manner, and by way of example, a UE may be able to send its SRs at a higher power, thereby increasing the likelihood that an SR will be received at the eNB 105-f after fewer attempts to obtain an uplink grant.

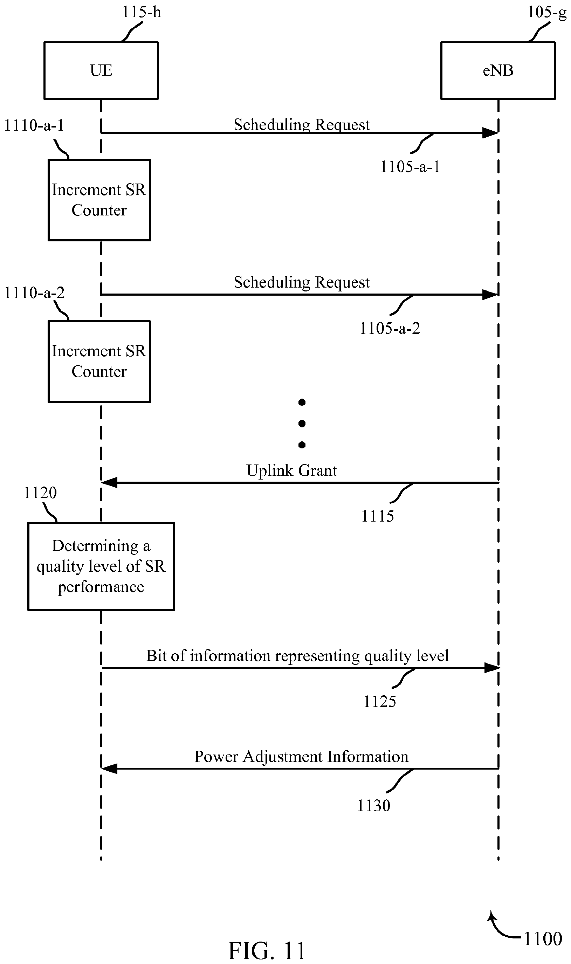

Referring now to **FIG. 11,** there is shown a flow diagram 1100. In accord with an exemplary message flow, a first SR 1105-a-1 is sent from the UE 115-h to an eNB 105-g. However, the SR 1105-a-1 is not received by the eNB 105-g, and after a predetermined time, the UE 115-h increments an SR counter at block 1110-a-1. The UE 115-h then sends a second SR 1105-a-2 to the eNB 105-g. The SR 1105-a-2 is also not received by the eNB 105-h, and after a predetermined time, the UE 115-h increments the SR counter again, at block 1110-a-2. This process may continue until, for example, some predetermined maximum number of attempts to obtain an uplink grant have been made.

After some arbitrary number of SRs have been sent, an uplink grant 1115 may be received. Note that in some cases, however, the uplink grant 1115 may not be received. Upon receiving the uplink grant 1115 or having sent a maximum number of SRs, a quality level of SR performance may be determined at block 1120. The quality level may be, for example, an indication that the quality level is "good" or bad". In such a case where the quality is selected from a binary option (i.e., "good" or "bad"), a single bit of information representing the quality level 1125 may be sent to the eNB 105-h or some other device. The bit of information 1125 may be sent upon the UE 115-h initiating its sending (e.g., upon the UE 115-h requesting and receiving an uplink grant), or upon the UE 115-h receiving a request for the information from the eNB 105-g. In response to the bit of information 1125 being received and analyzed by the eNB 105-g, and possibly in response to the bit of information 1125 being analyzed in combination with SR performance received from other UEs 115, the UE 115-h and/or other UEs 115 may receive power adjustment information 1130 from the eNB 105-g. The power adjustment information 1130 may be used to adjust an uplink power control setting used to send SRs.

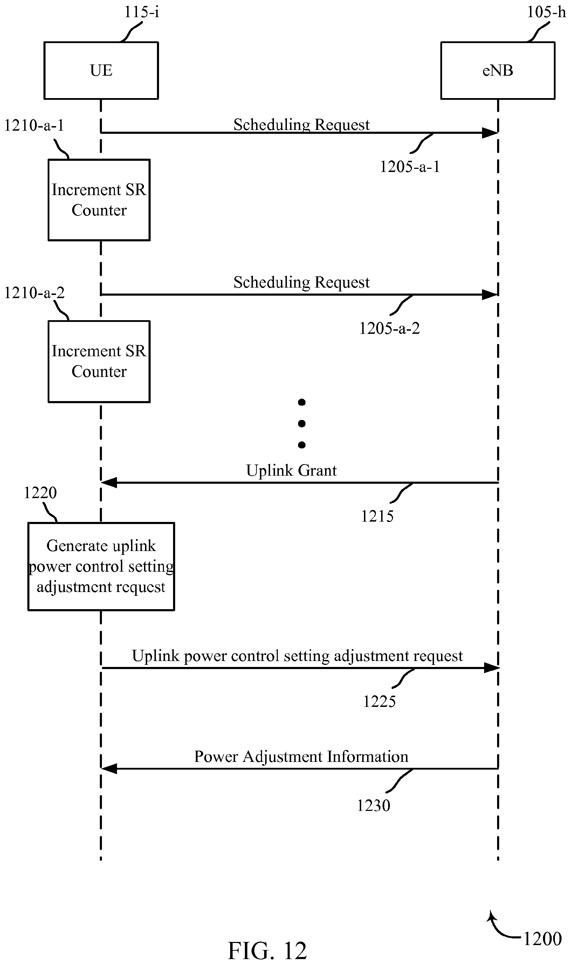

Turning to **FIG. 12,** there is shown a flow diagram 1200. In accord with an exemplary message flow, a first SR 1205-a-1 is sent from the UE 115-i to an eNB 105-h. However, the SR 1205-a-1 is not received by the eNB 105-h, and after a predetermined time, the UE 115-i increments an SR counter at block 1210-a-1. The UE 115-i then sends a second SR 1205-a-2 to the eNB 105-h. The SR 1205-a-2 is also not received by the eNB 105-h, and after a predetermined time, the UE 115-i increments the SR counter again, at block 1210-a-2. This process may continue until, for example, some predetermined maximum number of attempts to obtain an uplink grant have been made.

After some arbitrary number of SRs have been sent, an uplink grant 1215 may be received. Note that in some cases, however, the uplink grant 1215 may not be received. Upon receiving the uplink grant 1215 or having sent a maximum number of SRs, SR performance may be evaluated and, if poor, an uplink power control setting adjustment request may be generated at block 1220. The uplink power control setting adjustment request 1225 may be sent to the eNB 105-h or some other device. The uplink power control setting adjustment request 1225 may be sent upon the UE 115-i initiating its sending (e.g., upon the UE 115-i requesting and receiving an uplink grant). In response to the uplink power control setting adjustment request 1225 being received and acted upon by the eNB 105-h, and possibly in response to information relating to SR performance received from other UEs, the UE 115-i and or other UEs 115 may receive power adjustment information 1230 from the eNB 105-h. The power adjustment information 1230 may be used to adjust an uplink power control setting used to send SRs.

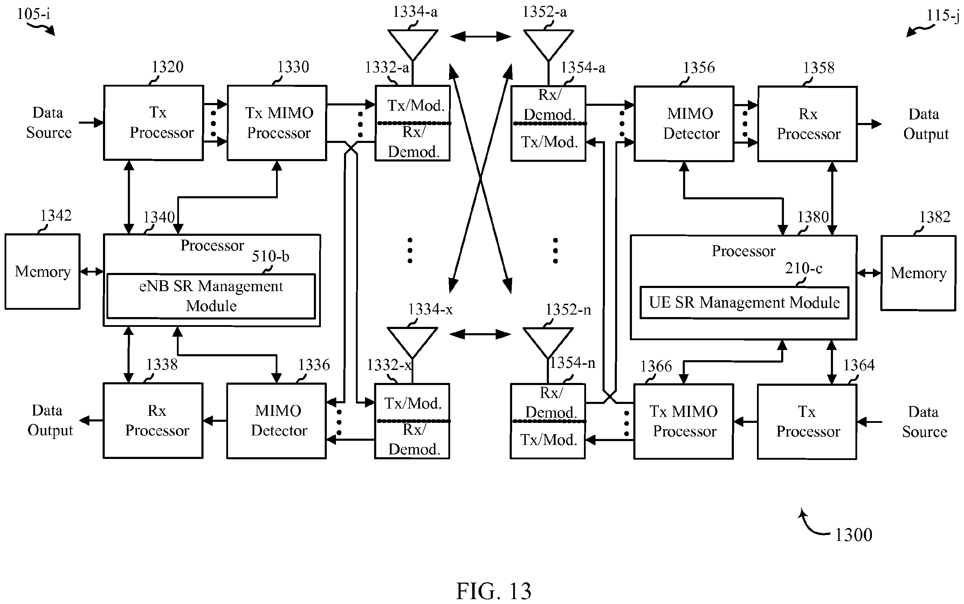

**FIG. 13** is a block diagram of a MIMO communication system 1300 including an eNB 105-i and a UE 115-j. The system 1300 may illustrate aspects of the system 100 of FIG. 1 , UEs 115 of FIGS. 1, 2, 3, 4, and/or 7-12, and eNBs 105 of FIGS. 1, 5, 6, and/or 7-12. The eNB 105-i may be equipped with antennas 1334-a through 1334-x, and the UE 115-j may be equipped with antennas 1352-a through 1352-n. In the system 1300, the eNB 105-i may be able to send data over multiple communication links at the same time. Each communication link may be called a "layer" and the "rank" of the communication link may indicate the number of layers used for communication. For example, in a 2x2 MIMO system where eNB 105-i transmits two "layers," the rank of the communication link between the eNB 105-i and the UE 115-j is two.

At the base station (or eNB) 105-i, a transmit processor 1320 may receive data from a data source. The transmit processor 1320 may process the data. The transmit processor 1320 may also generate reference symbols, and a cell-specific reference signal. A transmit (TX) MIMO processor 1330 may perform spatial processing (*e.g.*, precoding) on data symbols, control symbols, and/or reference symbols, if applicable, and may provide output symbol streams to the transmit modulators 1332-a through 1332-x. Each modulator 1332 may process a respective output symbol stream (*e.g.*, for OFDM, etc.) to obtain an output sample stream. Each modulator 1332 may further process (*e.g.*, convert to analog, amplify, filter, and upconvert) the output sample stream to obtain a downlink (DL) signal. In one example, DL signals from modulators 1332-a through 1332-x may be transmitted via the antennas 1334-a through 1334-x, respectively.

At the UE 115-j, the UE antennas 1352-a through 1352-n may receive the DL signals from the base station 105-a and may provide the received signals to the demodulators 1354-a through 1354-n, respectively. Each demodulator 1354 may condition (*e.g.*, filter, amplify, downconvert, and digitize) a respective received signal to obtain input samples. Each demodulator 1354 may further process the input samples (*e.g.*, for OFDM, etc.) to obtain received symbols. A MIMO detector 1356 may obtain received symbols from all the demodulators 1354-a through 1354-n, perform MIMO detection on the received symbols if applicable, and provide detected symbols. A receive processor 1358 may process (*e.g.,* demodulate, deinterleave, and decode) the detected symbols, providing decoded data for the UE 115-j to a data output, and provide decoded control information to a processor 1380, or memory 1382. As shown, the processor 1380 may include a UE SR management module 210-c for implementing functionality of the UE SR management module 210 shown in FIGS. 2, 3, and/or 4.

On the uplink (UL), at the UE 115-j, a transmit processor 1364 may receive and process data from a data source. The transmit processor 1364 may also generate reference symbols for a reference signal. The symbols from the transmit processor 1364 may be precoded by a transmit MIMO processor 1366 if applicable, further processed by the demodulators 1354-a through 1354-n (e.g., for SC-FDMA, etc.), and be transmitted to the base station 105-i in accordance with the transmission parameters received from the base station 105-i. At the base station 105-a, the UL signals from the UE 115-j may be received by the antennas 1334, processed by the demodulators 1332, detected by a MIMO detector 1336 if applicable, and further processed by a receive processor. The receive processor 1338 may provide decoded data to a data output and to the processor 1340. As shown, the processor 1340 may include an eNB SR management module 510-b for implementing functionality of the eNB SR management module 510 shown in FIGS. 5 and/or 6. The components of the UE 115-j may, individually or collectively, be implemented with one or more Application Specific Integrated Circuits (ASICs) adapted to perform some or all of the applicable functions in hardware. Each of the noted modules may be a means for performing one or more functions related to operation of the system 1300. Similarly, the components of the base station 105-i may, individually or collectively, be implemented with one or more Application Specific Integrated Circuits (ASICs) adapted to perform some or all of the applicable functions in hardware. Each of the noted components may be a means for performing one or more functions related to operation of the system 1300.

The communication networks that may accommodate some of the various disclosed embodiments may be packet-based networks that operate according to a layered protocol stack. For example, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use Hybrid ARQ (HARQ) to provide retransmission at the MAC layer to improve link efficiency. At the Physical layer, the transport channels may be mapped to Physical channels.

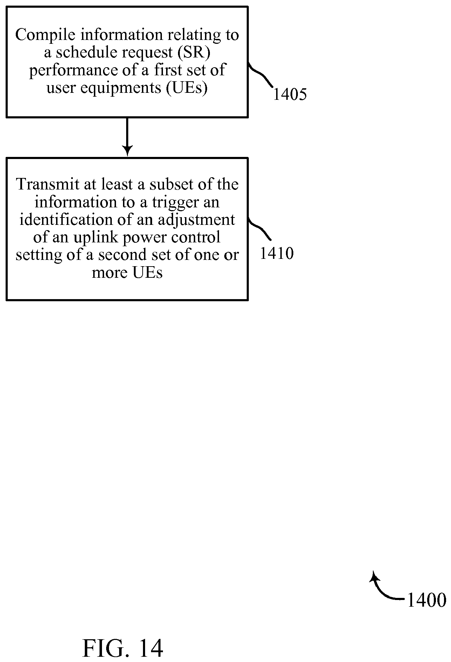

**FIG. 14** is a flow chart illustrating an example of a method 1400 for managing wireless communications. For clarity, the method 1400 is described below with reference to one of the UEs 115 shown in FIGS. 1, 2, 3, 4, 7, 8, 9, 10, 11, 12, and/or 13. In one implementation, the UE SR management module 210 may execute one or more sets of codes to control the functional elements of a UE 115 to perform the functions described below.

At block 1405, information relating to an SR performance of a first set of UEs 115 is compiled. In some embodiments, the first set of UEs 115 may include only one UE 115.

At block 1410, at least a subset of the information is transmitted to trigger an identification of an adjustment of an uplink power control setting of a second set of one or more UEs 115. The second set of UEs 115 may also include only one UE 115, and in some cases, the same UE 115 may define both the first and second sets of UEs 115. In other cases, the sets of one or more UEs 115 may be partially or wholly overlapping (e.g., the second set of UEs may include the first set of UEs).

The method 1400 may provide a way to increase the likelihood that a UE's SRs will be received by an eNB 105. It should be noted that the method 1400 is just one implementation and that the operations of the method 1400 may be rearranged or otherwise modified such that other implementations are possible.

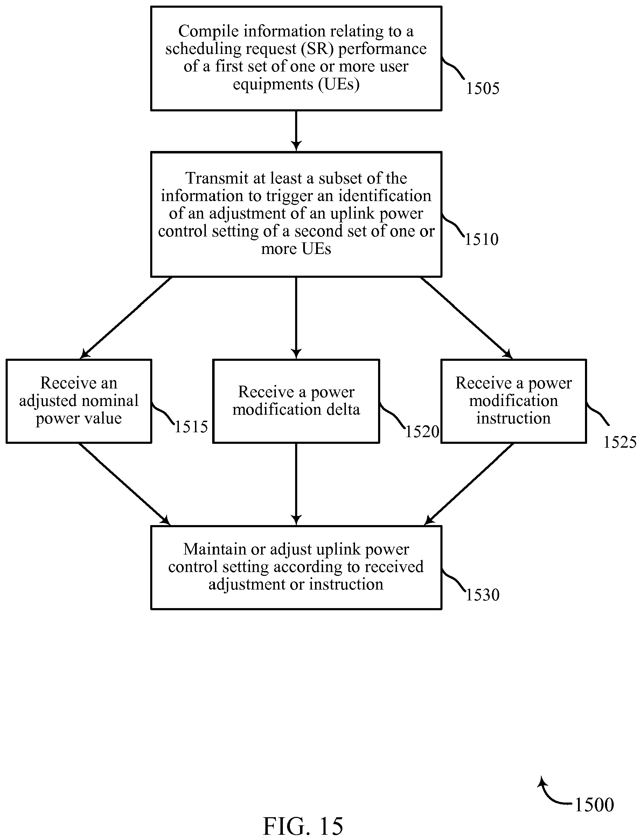

**FIG. 15** is a flow chart illustrating one example 1500 of a more detailed implementation of the method 1400 shown in FIG. 14. For clarity, the method 1500 is described below with reference to one of the UEs 115 shown in FIGS. 1, 2, 3, 4, 7, 8, 9, 10, 11, 12, and/or 13. In one implementation, the UE SR management module 210 may execute one or more sets of codes to control the functional elements of a UE 115 to perform the functions described below.

At block 1505, information relating to an SR performance of a first set of UEs 115 may be compiled; and at block 1410, at least a subset of the information is transmitted to trigger an identification of an adjustment of an uplink power control setting of a second set of one or more UEs 115.

At block 1515, 1520, or 1525, one of a number of information items may be received. At block 1515, an adjusted nominal power value may be received. At block 1520, a power modification delta may be received. At block 1525, a power modification instruction may be received. In various embodiments, one, none, or all of the information items referenced at blocks 1515, 1520, or 1525 may be received. At block 1530, an uplink power control setting is maintained or adjusted according to the received adjustment or instruction.

The information item(s) referenced at blocks 1515, 1520, or 1525 may be received in a MAC layer protocol data unit (PDU) or in a higher layer, and in some cases, the information item(s) may be received as application data.

The method 1500 may provide a way to increase the likelihood that a UE's SRs will be received by an eNB 105. It should be noted that the method 1500 is just one implementation and that the operations of the method 1500 may be rearranged or otherwise modified such that other implementations are possible.

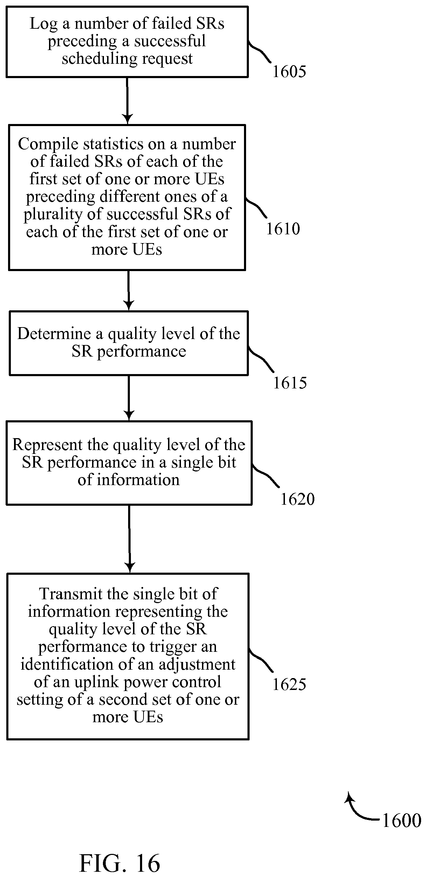

**FIG. 16** is a flow chart illustrating another example 1600 of a more detailed implementation of the method 1400 shown in FIG. 14. For clarity, the method 1600 is described below with reference to one of the UEs 115 shown in FIGS. 1, 2, 3, 4, 7, 8, 9, 10, 11, 12, and/or 13. In one implementation, the UE SR management module 210 may execute one or more sets of codes to control the functional elements of a UE 115 to perform the functions described below.

In one embodiment, information relating to an SR performance of a first set of one or more UEs may be compiled. This may include, for each successful SR, logging a number of failed SRs preceding the successful SR at block 1605. At block 1610, statistics on a number of failed SRs of each of the first set of one or more UEs preceding different ones of a plurality of successful SR of each of the first set of one or more UEs. Then, at block 1615, a quality level of the SR performance may be determined (e.g., "good", "bad", or somewhere between). When the quality level is a binary quality (e.g., "good" or "bad"), the quality level may be represented in a single bit of information at block 1620.

At block 1625, the single bit of information representing the quality level of the SR performance may be transmitted to trigger an identification of an adjustment of an uplink power control setting of a second set of one or more UEs.

The method 1600 may provide a way to increase the likelihood that a UE's SRs will be received by an eNB 105. It should be noted that the method 1600 is just one implementation and that the operations of the method 1600 may be rearranged or otherwise modified such that other implementations are possible.

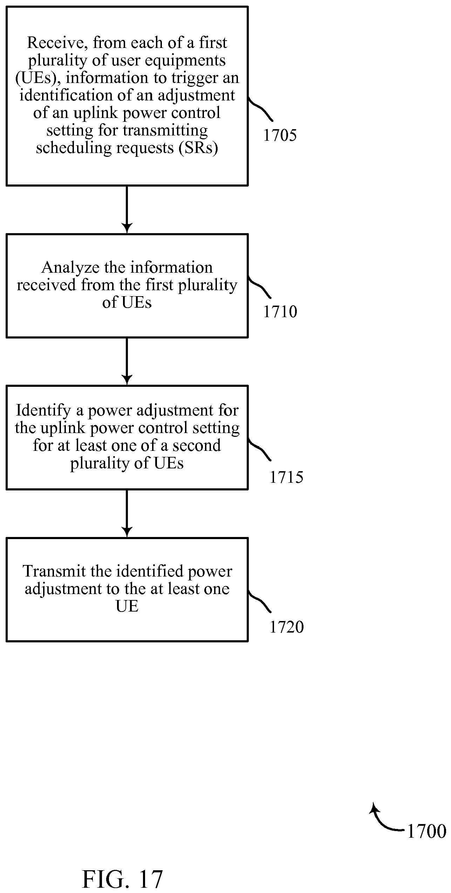

**FIG. 17** is a flow chart illustrating another example of a method 1700 for managing wireless communications. For clarity, the method 1700 is described below with reference to one of the eNBs 105 shown in FIG. 1, 5, 6, 7, 8, 9, 10, 11, 12, and/or 13. In one implementation, the eNB SR management module 510 may execute one or more sets of codes to control the functional elements of an eNB 105 to perform the functions described below.

At block 1705, information to trigger an identification of an adjustment of an uplink power control setting for transmitting scheduling requests may be received from each of a first plurality of UEs. At block 1710, the information received from the first plurality of UEs may be analyzed. This may be done, for example, by determining a statistical distribution of the received information across all of the plurality of UEs.

At block 1715, a power adjustment may be identified for the uplink power control setting for at least one of a second plurality of UEs 115, and the identified power adjustment may then transmitted to the at least one of the second plurality of UEs 115 at block 1720.

The method 1700 may provide a way to increase the likelihood that a UE's SRs may be received by an eNB 105. It should be noted that the method 1700 is just one implementation and that the operations of the method 1700 may be rearranged or otherwise modified such that other implementations are possible.

The detailed description set forth above in connection with the appended drawings describes exemplary embodiments and does not represent the only embodiments that may be implemented or that are within the scope of the claims. The term "exemplary" used throughout this description means "serving as an example, instance, or illustration," and not "preferred" or "advantageous over other embodiments." The detailed description includes specific details for the purpose of providing an understanding of the described techniques. These techniques, however, may be practiced without these specific details. In some instances, well-known structures and devices are shown in block diagram form in order to avoid obscuring the concepts of the described embodiments.

Techniques described herein may be used for various wireless communications systems such as cellular wireless systems, Peer-to-Peer wireless communications, wireless local access networks (WLANs), ad hoc networks, satellite communications systems, and other systems. The terms "system" and "network" are often used interchangeably. These wireless communications systems may employ a variety of radio communication technologies such as Code Division Multiple Access (CDMA), Time Division Multiple Access (TDMA), Frequency Division Multiple Access (FDMA), Orthogonal FDMA (OFDMA), Single-Carrier FDMA (SC-FDMA), and/or other radio technologies. Generally, wireless communications are conducted according to a standardized implementation of one or more radio communication technologies called a Radio Access Technology (RAT). A wireless communications system or network that implements a Radio Access Technology may be called a Radio Access Network (RAN).

Examples of Radio Access Technologies employing CDMA techniques include CDMA2000, Universal Terrestrial Radio Access (UTRA), etc. CDMA2000 covers IS-2000, IS-95, and IS-856 standards. IS-2000 Releases 0 and A are commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. Examples of TDMA systems include various implementations of Global System for Mobile Communications (GSM). Examples of Radio Access Technologies employing OFDM and/or OFDMA include Ultra Mobile Broadband (UMB), Evolved UTRA (E-UTRA), IEEE 802.11 (Wi-Fi), IEEE 802.16 (WiMAX), IEEE 802.20, Flash-OFDM, etc. UTRA and E-UTRA are part of Universal Mobile Telecommunication System (UMTS). 3GPP Long Term Evolution (LTE) and LTE-Advanced (LTE-A) are new releases of UMTS that use E-UTRA. UTRA, E-UTRA, UMTS, LTE, LTE-A, and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies.

**EP 2 946 615 B1**

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, multiple microprocessors, one or more microprocessors in conjunction with a DSP core, or any other such configuration. A processor may in some cases be in electronic communication with a memory, where the memory stores instructions that are executable by the processor.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items prefaced by "at least one of" indicates a disjunctive list such that, for example, a list of "at least one of A, B, or C" means A or B or C or AB or AC or BC or ABC (*i.e.,* A and B and C).

A computer program product or computer-readable medium both include a computer-readable storage medium and communication medium, including any mediums that facilitates transfer of a computer program from one place to another. A storage medium may be any medium that can be accessed by a general purpose or special purpose computer. By way of example, and not limitation, computer-readable medium can comprise RAM, ROM, EEPROM, CD-ROM or other optical disk storage, magnetic disk storage or other magnetic storage devices, or any other medium that can be used to carry or store desired computer-readable program code in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and blu-ray disc where disks usually reproduce data magnetically, while discs reproduce data optically with lasers. Combinations of the above are also included within the scope of computer-readable media.

The previous description of the disclosure is provided to enable a person skilled in the art to make or use the disclosure. Various modifications to the disclosure will be readily apparent to those skilled in the art, and the generic principles defined herein may be applied to other variations without departing from the scope of the disclosure. Throughout this disclosure the term "example" or "exemplary" indicates an example or instance and does not imply or require any preference for the noted example. Thus, the disclosure is not to be limited to the examples and designs described herein but is to be accorded the widest scope consistent with the principles and novel features disclosed herein.

**Claims**

1. A method (1400) for managing wireless communications performed by a user equipment (115), UE, comprising:

   compiling (1405) information relating to a scheduling request performance of a first set of one or more user equipments, UEs, wherein compiling information relating to the scheduling request performance comprises:

   determining a quality level of the scheduling request performance, and
   generating an uplink power control setting adjustment request, the request being based at least in part on the determined quality level of the scheduling
   request performance; and

   transmitting (1410) at least a subset of the information to trigger an identification of an adjustment of an uplink power control setting of a second set of one or more UEs.

**2.** The method of claim 1, further comprising:

> receiving an adjusted nominal power value; and
> adjusting the uplink power control setting according to the adjusted nominal power value.

**3.** The method of claim 1, further comprising:

> receiving a power modification delta; and
> adjusting the uplink power control setting according to the power modification delta.

**4.** The method of claim 1, further comprising:

> receiving a power modification instruction; and
> maintaining the uplink power control setting according to the power modification instruction.

**5.** The method of claim 1, further comprising:

> representing the quality level of the scheduling request performance in a single bit of information.

**6.** The method of claim 5, wherein transmitting at least a subset of the information to trigger the identification of the adjustment of the uplink power control setting comprises:

> transmitting the single bit of information representing the quality level of the scheduling request performance.

**7.** The method of claim 1, wherein transmitting at least a subset of the information to trigger the identification of the adjustment of the uplink power control setting comprises:

> transmitting the uplink power control adjustment request.

**8.** The method of claim 1, wherein the adjustment of the uplink power control setting comprises:

> an instruction to increase a transmit power level for uplink transmissions of scheduling requests; or an instruction to decrease a transmit power level for uplink transmissions of scheduling requests.

**9.** The method of claim 1, wherein compiling information relating to the scheduling request performance comprises:

> determining whether a number of failed scheduling requests satisfies a threshold; and upon determining that the number of failed scheduling requests satisfies the threshold,
> transmitting an indication of a complete scheduling request failure.

**10.** The method of claim 1, wherein compiling information relating to the scheduling request performance comprises:

> logging a number of failed scheduling requests preceding a successful scheduling request; or compiling statistics on a number of failed scheduling requests of each of the first set of one or more UEs preceding different ones of a plurality of successful scheduling requests of each of the first set of one or more UEs; or correlating at least one failed scheduling request with at least one radio frequency, RF, measurement; or
> correlating at least one failed scheduling request with a Physical Uplink Control Channel, PUCCH, format; or ranking items of the compiled information based on a reliability level associated with each item of the compiled information and selecting a subset of higher ranked items for transmission to cause the adjustment of the uplink power control setting.

**11.** A user equipment (115), UE, for managing wireless communications, comprising:

> means (210) for compiling information relating to a scheduling request performance of a first set of one or more user equipments, UEs, wherein the means for compiling information relating to the scheduling request performance comprises:
>
> > means for determining a quality level of the scheduling request performance,

and

means for generating an uplink power control setting adjustment request, the request being based at least in part on the determined quality level of the

scheduling request performance; and

means (215) for transmitting at least a subset of the information to trigger an identification of an adjustment of an uplink power control setting of a second set of one or more UEs.

**12.** The UE of claim 11, further comprising:

means for receiving an adjusted nominal power value; and
means for adjusting the uplink power control setting according to the adjusted nominal power value.

**13.** The UE of claim 11, further comprising:

means for receiving a power modification delta; and
means for adjusting the uplink power control setting according to the power modification delta.

**14.** The UE of claim 11, further comprising:

means for receiving a power modification instruction; and
means for maintaining the uplink power control setting according to the power modification instruction.

**15.** A computer program comprising executable instructions for causing at least one computer to perform a method according to one of the claims 1 to 10 when executed.

**Patentansprüche**

**1.** Verfahren (1400) zum Verwalten von drahtlosen Kommunikationen, das durch ein Benutzergerät (115), UE, ausgeführt wird, das Verfahren umfassend:

Aufstellen (1405) von Information bezüglich eines Zuteilungsanfrage-Verhaltens eines ersten Satzes von einem oder mehreren Benutzergeräten, UEs, wobei das Aufstellen von Information bezüglich des Zuteilungsanfrage-Verhaltens umfasst:

Bestimmen eines Qualitätsniveaus des Zuteilungsanfrage-Verhaltens, und
Erzeugen einer Aufwärtsstrecken-Leistungssteuerungseinstellung-Anpassungsanfrage, wobei die Anfrage zumindest teilweise auf dem bestimmten
Qualitätsniveau des Zuteilungsanfrage-Verhaltens basiert; und

Übermitteln (1410) zumindest eines Teilsatzes der Information um eine Identifikation einer Anpassung einer Aufwärtsstrecken-Leistungssteuerungseinstellung eines zweiten Satzes von einem oder mehreren UEs auszulösen.

**2.** Verfahren gemäß Anspruch 1 weiterhin umfassend:

Empfangen eines angepassten Nennleistungswertes; und
Anpassen der Aufwärtsstrecken-Leistungssteuerungseinstellung entsprechend dem angepassten Nennleistungswert.

**3.** Verfahren gemäß Anspruch 1 weiterhin umfassend:

Empfangen eines Leistungsänderung-Deltas; und
Anpassen der Aufwärtsstrecken-Leistungssteuerungseinstellung entsprechend dem Leistungsänderung-Delta.

**4.** Verfahren gemäß Anspruch 1 weiterhin umfassend:

Empfangen einer Leistungsänderung-Anweisung; und

Beibehalten der Aufwärtsstrecken-Leistungssteuerungseinstellung entsprechend der Leistungsänderung-Anweisung.

5. Verfahren gemäß Anspruch 1 weiterhin umfassend:

Darstellen des Qualitätsniveaus des Zuteilungsanfrage-Verhaltens als ein einziges Informationsbit.

6. Verfahren gemäß Anspruch 5, wobei das Übermitteln zumindest eines Teilsatzes der Information um die Identifikation der Anpassung der Aufwärtsstrecken-Leistungssteuerungseinstellung auszulösen umfasst:

Übermitteln des einzigen Informationsbits, welches das Qualitätsniveaus des Zuteilungsanfrage-Verhaltens darstellt.

7. Verfahren gemäß Anspruch 1, wobei das Übermitteln zumindest eines Teilsatzes der Information um die Identifikation der Anpassung der Aufwärtsstrecken-Leistungssteuerungseinstellung auszulösen umfasst:

Übermitteln der Aufwärtsstrecken-Leistungssteuerungseinstellung-Anpassungsanfrage.

8. Verfahren gemäß Anspruch 1, wobei die Anpassung der Aufwärtsstrecken-Leistungssteuerungseinstellung umfasst:

eine Anweisung ein Sendeleistungsniveau für Aufwärtsstrecken-Übermittlungen von Zuteilungsanfragen zu erhöhen; oder eine Anweisung ein Sendeleistungsniveau für Aufwärtsstrecken-Übermittlungen von Zuteilungsanfragen zu verringern.

9. Verfahren gemäß Anspruch 1, wobei das Aufstellen von Information bezüglich des Zuteilungsanfrage-Verhaltens umfasst:

Bestimmen, ob eine Anzahl von fehlgeschlagenen Zuteilungsanfragen einen Schwellenwert einhält; und bei Bestimmen, dass die Anzahl von fehlgeschlagenen Zuteilungsanfragen den Schwellenwert einhält, Übermitteln einer Indikation eines vollständigen Zuteilungsanfragen-Fehlschlags.

10. Verfahren gemäß Anspruch 1, wobei das Aufstellen von Information bezüglich des Zuteilungsanfrage-Verhaltens umfasst:

Aufzeichnen einer Anzahl von fehlgeschlagenen Zuteilungsanfragen vorhergehend einer erfolgreichen Zuteilungsanfrage; oder Aufstellen von Statistiken über eine Anzahl von fehlgeschlagenen Zuteilungsanfragen jedes aus dem ersten Satz von einem oder

mehreren UEs vorhergehend verschiedenen aus einer Mehrzahl von erfolgreichen Zuteilungsanfragen jedes aus dem ersten Satz von einem oder mehreren UEs; oder Korrelieren zumindest einer fehlgeschlagenen Zuteilungsanfrage mit zumindest einer Radiofrequenz-, RF, Messung; oder Korrelieren zumindest einer fehlgeschlagenen Zuteilungsanfrage mit einem Physical Uplink Control Channel-, PUCCH, Format; oder

Einstufen von Elementen der aufgestellten Information basierend auf einem Zuverlässigkeitsniveau, das jedem Element der aufgestellten Information zugeordnet ist und Auswählen eines Teilsatzes von höher eingestuften Elementen für Übermittlung, um die Anpassung der Aufwärtsstrecken-Leistungssteuerungseinstellung zu verursachen.

11. Benutzergerät (115), UE, zum Verwalten von drahtlosen Kommunikationen aufweisend:

Mittel (210) zum Aufstellen von Information bezüglich eines Zuteilungsanfrage-Verhaltens eines ersten Satzes von einem oder mehreren Benutzergeräten, UEs, wobei das Mittel zum Aufstellen von Information bezüglich des Zuteilungsanfrage-Verhaltens aufweist:

Mittel zum Bestimmen eines Qualitätsniveaus des Zuteilungsanfrage-Verhaltens, und Mittel zum Erzeugen einer Aufwärtsstrecken-Leistungssteuerungseinstellung-Anpassungsanfrage, wobei die Anfrage zumindest teilweise auf dem bestimmten Qualitätsniveau des Zuteilungsanfrage-Verhaltens basiert; und

Mittel (215) zum Übermitteln zumindest eines Teilsatzes der Information um eine Identifikation einer Anpassung einer Aufwärtsstrecken-Leistungssteuerungseinstellung eines zweiten Satzes von einem oder mehreren UEs auszulösen.

**12.** UE gemäß Anspruch 11 weiterhin aufweisend:

Mittel zum Empfangen eines angepassten Nennleistungswertes; und
Mittel zum Anpassen der Aufwärtsstrecken-Leistungssteuerungseinstellung entsprechend dem angepassten Nennleistungswert.

**13.** UE gemäß Anspruch 11 weiterhin aufweisend:

Mittel zum Empfangen eines Leistungsänderung-Deltas; und
Mittel zum Anpassen der Aufwärtsstrecken-Leistungssteuerungseinstellung entsprechend dem Leistungsänderung-Delta.

**14.** UE gemäß Anspruch 11 weiterhin aufweisend:

Mittel zum Empfangen einer Leistungsänderung-Anweisung; und
Mittel zum Beibehalten der Aufwärtsstrecken-Leistungssteuerungseinstellung entsprechend der Leistungsänderung-Anweisung.

**15.** Computerprogram aufweisend ausführbare Anweisungen zum Veranlassen zumindest eines Computers um ein Verfahren nach einem der Ansprüche 1 bis 10 durchzuführen, wenn das Computerprogramm ausgeführt wird.


## Revendications

**1.** Procédé (1400) pour gérer des communications sans fil réalisées par un équipement utilisateur (115), UE, comprenant :

la compilation (1405) d'informations relatives à une performance de demande de planification d'un premier ensemble d'un ou plusieurs équipements utilisateurs, UE,
dans lequel la compilation d'informations relatives à la performance de demande de planification comprend :

la détermination d'un niveau de qualité de performance de demande de planification, et
la génération d'une demande d'ajustement de réglage de commande de puissance de liaison montante, la demande étant basée au moins en partie sur le niveau de qualité déterminé de la performance de demande de planification ; et
la transmission (1410) d'au moins un sous-ensemble des informations pour déclencher une identification d'un ajustement d'un réglage d'une commande de puissance de liaison montante d'un deuxième ensemble d'un ou plusieurs UE.

**2.** Procédé selon la revendication 1, comprenant en outre :

la réception d'une valeur de puissance nominale ajustée : et
l'ajustement du réglage de commande de puissance de liaison montante en fonction de la valeur de puissance nominale ajustée.

**3.** Procédé selon la revendication 1, comprenant en outre :

la réception d'un delta de modification de puissance ; et
l'ajustement du réglage de commande de puissance de liaison montante en fonction du delta de modification de puissance.

**4.** Procédé selon la revendication 1, comprenant en outre :

la réception d'une instruction de modification de puissance ; et

le maintien du réglage de commande de puissance de liaison montante en fonction de l'instruction de modification de puissance.

5. Procédé selon la revendication 1, comprenant en outre :

la représentation du niveau de qualité de la performance de demande de planification par un bit unique d'informations.

6. Procédé selon la revendication 5, dans lequel la transmission d'au moins un sous-ensemble des informations pour déclencher l'ajustement du réglage de commande de puissance de liaison montante comprend :

la transmission du bit unique d'informations représentant le niveau de qualité de performance de demande de planification.

7. Procédé selon la revendication 1, dans lequel la transmission d'au moins un sous-ensemble des informations pour déclencher l'ajustement du réglage de commande de puissance de liaison montante comprend :

la transmission de la demande d'ajustement de commande de puissance de liaison montante.

8. Procédé selon la revendication 1, dans lequel l'ajustement du réglage de commande de puissance de liaison montante comprend :

une instruction d'augmenter un niveau de puissance d'émission pour les transmissions de liaison montante de demandes de planification ; ou une instruction de réduire un niveau de puissance d'émission pour les transmissions de liaison montante de demandes de planification.

9. Procédé selon la revendication 1, dans lequel la compilation d'informations relatives à la performance de demande de planification comprend :

le fait de déterminer si le nombre de demandes de planification qui ont échoué satisfait un seuil ; et lorsqu'il est déterminé que le nombre de demandes de planification qui ont échoué satisfait le critère, la transmission d'une indication d'échec de demande de planification complet.

10. Procédé selon la revendication 1, dans lequel la compilation d'informations relatives à la performance de demande de planification comprend :

l'enregistrement d'un nombre de demandes de planification qui ont échoué précédant une demande de planification réussie ; ou la compilation de statistiques concernant un nombre de demandes de planification qui ont échoué de chacun du premier ensemble d'un ou plusieurs UE précédant plusieurs autres d'une pluralité de demandes de planification réussies de chacun du premier ensemble d'un ou plusieurs UE ; ou la corrélation d'au moins une demande de planification qui a échoué avec au moins une mesure de fréquence radio, RF ; ou la corrélation d'au moins une demande de planification qui a échoué avec un format de canal physique de commande de liaison montante, PUCCH ; ou le classement des éléments des informations compilées sur la base d'un niveau de fiabilité associé à chacun des éléments des informations compilées et la sélection d'un sous-ensemble des éléments mieux classés pour les transmettre pour provoquer l'ajustement du réglage de commande de puissance de liaison montante.

11. Équipement utilisateur (115), UE, pour gérer des communications sans fil, comprenant :

des moyens (210) de compilation d'informations relatives à une performance de demande de planification par un premier ensemble d'un ou plusieurs équipements utilisateurs, UE, dans lequel les moyens de compilation d'informations relatives à la performance de demande de planification comprennent :

des moyens de détermination d'un niveau de qualité de performance de demande de planification, et des moyens de génération d'une demande d'ajustement de réglage de commande de puissance de liaison montante, la demande étant basée au moins en partie sur le niveau de qualité déterminé de la performance de demande de planification ; et des moyens (215) de transmission d'au moins un sous-ensemble des informations pour déclencher une identification d'un ajustement d'un réglage de commande de puissance de liaison montante d'un deuxième ensemble d'un ou plusieurs UE.

12. UE selon la revendication 11, comprenant en outre :

des moyens de réception d'une valeur de puissance nominale ajustée ; et
des moyens d'ajustement du réglage de commande de puissance de liaison montante en fonction de la valeur de puissance nominale ajustée.

13. UE selon la revendication 11, comprenant en outre :

des moyens de réception d'un delta de modification de puissance ; et
des moyens d'ajustement du réglage de commande de puissance de liaison montante en fonction du delta de modification de puissance.

14. UE selon la revendication 11, comprenant en outre :

des moyens de réception d'une instruction de modification de puissance ; et
des moyens de maintien du réglage de commande de puissance de liaison montante en fonction de l'instruction de modification de puissance.

15. Programme informatique comprenant des instructions exécutables pour amener au moins un ordinateur à réaliser un procédé selon l'une des revendications 1 à 10 lorsqu'il est exécuté.

FIG. 1

115-a

| UE Receiver Module | UE Scheduling Request (SR) Management Module | UE Transmitter Module |

205                               210                               215

200

FIG. 2

FIG. 3

115-c

210-b

Logging Module

405

Statistics Compiling
Module

410

Correlation Module

415

Ranking Module

420

SR Quality
Determination Module

425

Request Generation
Module

430

Complete SR Failure
Determination Module

435

305-a

Nominal Power
Adjustment Module

440

Delta Power
Adjustment Module

445

Power Instruction
Analysis Module

450

310-a

UE
Receiver
Module

205

SR
Generation
Module

455

UE
Transmitter
Module

215

FIG. 4

400

105-a

```
┌ ─ ─ ─ ─ ─ ─ ─ ─ ─ ─ ─ ─ ─ ─ ─ ─ ─ ─ ─ ─ ─ ─ ┐
│  ┌──────────────┐  ┌──────────────┐  ┌──────────────┐  │
│  │              │  │ eNB Scheduling│  │              │  │
──┼─▶│ eNB Receiver │─▶│ Request (SR) │─▶│eNB Transmitter│─┼─▶
│  │   Module     │  │  Management   │  │   Module     │  │
│  │              │  │   Module      │  │              │  │
│  └──────────────┘  └──────────────┘  └──────────────┘  │
│        505              510              515            │
└ ─ ─ ─ ─ ─ ─ ─ ─ ─ ─ ─ ─ ─ ─ ─ ─ ─ ─ ─ ─ ─ ─ ┘
```

500

FIG. 5

105-b

510-a

Analysis Module

605

eNB Receiver
Module

Power Adjustment
Identifying Module

610

eNB
Transmitter
Module

505

Interference Adjustment
Identifying Module

615

515

600

FIG. 6

115-d

UE

105-c

eNB

710-a-1

Scheduling Request

705-a-1

Increment SR
Counter

710-a-2

Scheduling Request

705-a-2

Increment SR
Counter

•
•
•

Uplink Grant

720

715

Compile information
relating to SR
performance

Information Relating to SR Performance

725

Power Adjustment Information

730

700

FIG. 7

115-e

| UE |

105-d

| eNB |

810-a-1

Scheduling Request

805-a-1

| Increment SR Counter |

810-a-2

Scheduling Request

805-a-2

| Increment SR Counter |

•
•
•

Uplink Grant

815

820

| Compile information relating to SR performance |

Information Relating to SR Performance

825

835

Adjusted Nominal Power Value

830

| Adjust uplink power control setting |

FIG. 8

800

FIG. 9

115-g

105-f

| UE | | eNB |

1010-a-1

Scheduling Request

1005-a-1

Increment SR Counter

1010-a-2

Scheduling Request

1005-a-2

Increment SR Counter

Uplink Grant

1015

1020

Compile information relating to SR performance

Information Relating to SR Performance

1025

1035

TPC Command

1030

Maintain uplink power control setting

FIG. 10

1000

FIG. 11

FIG. 12

FIG. 13

EP 2 946 615 B1

Compile information relating to
a schedule request (SR)
performance of a first set of
user equipments (UEs)

1405

Transmit at least a subset of the
information to a trigger an
identification of an adjustment
of an uplink power control
setting of a second set of one or
more UEs

1410

1400

FIG. 14

```
┌─────────────────────────────────┐
│   Compile information relating to a  │
│ scheduling request (SR) performance  │
│    of a first set of one or more user │╲ 1505
│          equipments (UEs)            │
└─────────────────────────────────┘
                  │
                  ▼
┌─────────────────────────────────┐
│      Transmit at least a subset of the │
│   information to trigger an identification │
│     of an adjustment of an uplink power │╲ 1510
│  control setting of a second set of one or │
│              more UEs                  │
└─────────────────────────────────┘
```

Compile information relating to a scheduling request (SR) performance of a first set of one or more user equipments (UEs) — 1505

Transmit at least a subset of the information to trigger an identification of an adjustment of an uplink power control setting of a second set of one or more UEs — 1510

Receive an adjusted nominal power value — 1515

Receive a power modification delta — 1520

Receive a power modification instruction — 1525

Maintain or adjust uplink power control setting according to received adjustment or instruction — 1530

1500

FIG. 15

Log a number of failed SRs
preceding a successful
scheduling request

1605

Compile statistics on a number
of failed SRs of each of the
first set of one or more UEs
preceding different ones of a
plurality of successful SRs of
each of the first set of one or
more UEs

1610

Determine a quality level of the
SR performance

1615

Represent the quality level of the
SR performance in a single bit
of information

1620

Transmit the single bit of
information representing the
quality level of the SR
performance to trigger an
identification of an adjustment
of an uplink power control
setting of a second set of one or
more UEs

1625

1600

FIG. 16

Receive, from each of a first
plurality of user equipments
(UEs), information to trigger an
identification of an adjustment
of an uplink power control
setting for transmitting
scheduling requests (SRs)

1705

Analyze the information
received from the first plurality
of UEs

1710

Identify a power adjustment for
the uplink power control setting
for at least one of a second
plurality of UEs

1715

Transmit the identified power
adjustment to the at least one
UE

1720

1700

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 95152413 A, Shukair
- US 61753862 A, Shukair
- US 20120236805 A1